# EUROPEAN PATENT SPECIFICATION

(11) **EP 3 296 133 B1**
(45) Date of publication and mention of the grant of the patent: **14.07.2021**
(21) Application number: 16792438.0
(22) Date of filing: 28.03.2016
(51) Int. Cl.: B60K 6/405, B60K 6/40, F16H 1/06, F16H 57/04, B60K 6/46, B60K 7/00, B60L 50/16

(54) **POWER TRANSMITTING DEVICE AND POWER OUTPUTTING DEVICE WITH SAME**
LEISTUNGSÜBERTRAGUNGSVORRICHTUNG UND LEISTUNGSAUSGABEVORRICHTUNG DAMIT
DISPOSITIF DE TRANSMISSION DE PUISSANCE ET DISPOSITION D'ÉMISSION DE PUISSANCE COMPRENANT CELUI-CI

(30) Priority: 13.05.2015 JP 2015098619
(43) Date of publication of application: 21.03.2018
(73) Proprietor: Aichi Machine Industry Co., Ltd., Nagoya-shi, Aichi 456-8601 (JP)
(72) Inventor: NAKADERA, Hiroyuki, Nagoya-shi Aichi 456-8601 (JP); NAKASHIMA, Takayuki, Nagoya-shi Aichi 456-8601 (JP); SATO, Kazuhiko, Nagoya-shi Aichi 456-8601 (JP); AOYAMA, Hideki, Nagoya-shi Aichi 456-8601 (JP); KOKUBO, Akira, Nagoya-shi Aichi 456-8601 (JP); KONDO, Hiromasa, Nagoya-shi Aichi 456-8601 (JP); SATO, Motohiko, Nagoya-shi Aichi 456-8601 (JP)
(74) Representative: Global IP Europe Patentanwaltskanzlei
(86) International application number: PCT/JP2016/059898
(87) International publication number: WO 2016/181713

(56) References cited:
- EP-A2- 2 159 092
- WO-A1-2009/128288
- JP-A- 2005 106 266
- JP-A- 2007 057 093
- JP-A- 2009 118 558
- JP-A- 2010 151 261
- US-A1- 2002 036 106
- US-A1- 2008 128 208
- US-A1- 2011 192 245
- US-A1- 2014 054 114

## Description

### Technical Field

The present invention relates to a power transmission device configured to transmit, from an internal combustion engine to a rotation shaft of a power generator, power input via an output shaft of the internal combustion engine and to transmit, from a motor to a drive shaft, power input via a rotation shaft of the motor, and to a power output device provided with the power transmission device.

### Background Art

A power transmission device is disclosed in Japanese Unexamined Patent Application Publication No. 2010-247786A (Patent Document 1) in which a crank shaft of an engine and a rotation shaft of a generator are connected via a generator drive gear train, and a rotation shaft of a motor and a differential shaft of a differential device are connected via a motor drive power transmission gear train and a final gear train, so as to transmit power from the engine to the generator and to transmit power from the motor to an output shaft.

In this power transmission device, an oil pump is provided that is driven by the engine. Thereby, lubrication of each part of the device, particularly the generator drive gear train, can be favorably performed even when only the engine is driven while the driving of the motor is stopped in order to charge with electricity.

US 2002/036106 A1 discloses a power transmission device configured to transmit, from an internal combustion engine to a rotation shaft of a power generator, power input via an output shaft of the internal combustion engine, and to transmit, from a motor to a drive shaft, power input via a rotation shaft of the motor, the power transmission device comprising: a first input shaft disposed in parallel to the drive shaft and connected to the output shaft of the internal combustion engine; a coupling shaft disposed in parallel to the first input shaft and connected to the rotation shaft of the power generator; a second input shaft disposed in parallel to the drive shaft and connected to the rotation shaft of the motor; a first gear mechanism connecting the first input shaft and the coupling shaft; a second gear mechanism connecting the second input shaft and the drive shaft; and a case member.

US 2008/128208 A1 discloses the hybrid vehicle 20 having the differential ring gear disposed between the motor and the rear drive shaft and configured to scoop up lubricating oil stored in the bottom of the casing towards the catch tanks.

### Citation List

### Patent Literature

Patent Document 1: JP-A-2010-247786

### Summary of Invention

### Technical Problem

However, in the power transmission device disclosed in Patent Document 1, it is required that the oil pump be separately provided and a space be secured where the oil pump is disposed; thus, there is room for improvement in terms of reducing the number of components and making a device more compact.

In light of the foregoing, an object of the present invention is to provide a technique which ensures lubrication of each part of a device while enabling a reduction in the number of parts and in the size of the device.

### Solution to Problem

A power transmission device and a power output device provided with the power transmission device of the present invention adopt the following means in order to achieve the object described above.

According to a preferable aspect of the power transmission device according to the present invention, the power transmission device is configured to transmit, from an internal combustion engine to a rotation shaft of a power generator, power input via an output shaft of the internal combustion engine, and to transmit, from a motor to a drive shaft, power input via a rotation shaft of the motor. The power transmission device includes a first input shaft, a coupling shaft, a first gear mechanism, a second gear mechanism, and a case member. The first input shaft is disposed in parallel to the drive shaft and is configured to be connected to an output shaft of the internal combustion engine. The coupling shaft is disposed in parallel to the first input shaft and is configured to be connected to the rotation shaft of the power generator. A second input shaft is disposed in parallel to the drive shaft and is configured to be connected to the rotation shaft of the motor. The first gear mechanism connects the first input shaft and the coupling shaft. The second gear mechanism is configured to connect the second input shaft and the drive shaft. The case member is configured to store lubricating oil. Furthermore, the second gear mechanism includes a driving gear configured to be at least partially kept immersed in the lubricating oil stored in the case member. In addition, the case member includes a holding portion configured to hold lubricating oil that has been scooped up by the driving gear. Furthermore, the first gear mechanism includes a scooping up gear configured to scoop up lubricating oil held in the holding portion. The case member is configured to guide to the holding portion at least some of the lubricating oil that has been scooped up by the scooping up gear.

In the present invention, "lubricating oil that has been scooped up by the scooping up gear" preferably includes not only lubricating oil splashed as a result of the scooping up by the scooping up gear, but also lubricating oil that has been scooped up by the scooping up gear and carried to a meshing section between the scooping up gear and another gear and is then splashed from the meshing section, or lubricating oil that is caused to rotate from the meshing section along with the other gear and is splashed in a rotational direction of the other gear.

According to the present invention, the driving gear is configured to be at least partially kept immersed in the lubricating oil stored in a bottom portion of the case member, which enables, when the motor is driven, each of the parts of the device to be lubricated with the lubricating oil scooped up by the driving gear. Furthermore, the scooping up gear is configured to scoop up the lubricating oil held in the holding portion, which enables, even when only the internal combustion engine is driven, each of the parts of the device to be lubricated with the lubricating oil scooped up by the scooping up gear. Note that, in this configuration, at least some of the lubricating oil scooped up by the scooping up gear is guided to the holding portion, which can prevent depletion of the lubricating oil held in the holding portion. Thus, the lubrication with the lubricating oil scooped up by the scooping up gear can be stably ensured.

In this configuration, irrespective of whether or not the motor is being driven, favorable lubrication can be ensured without the use of a dedicated component, such as an oil pump. As a result, the lubrication of each of the parts of the device can be ensured while achieving a reduction in the number of parts and in the size of the device.

According to another aspect of the power transmission device according to the present invention, the case member includes a guiding portion configured to guide to the holding portion at least some of the lubricating oil that has been scooped up by the scooping up gear.

According to this aspect, a simple configuration in which only the guiding portion is provided on the case member enables the lubricating oil scooped up by the scooping up gear to be guided to the holding portion.

According to yet another aspect of the power transmission device according to the present invention, the guiding portion includes a protruding wall portion protruding toward the holding portion from an upper interior wall surface of the case member. Further, the guiding portion is configured to guide to the holding portion the lubricating oil that has been scooped up by the scooping up gear and impinged on the upper interior wall surface of the case member by causing the lubricating oil to flow from the upper interior wall surface along the protruding wall portion.

According to this aspect, a simple configuration in which only the protruding wall portion is provided enables the lubricating oil scooped up by the scooping up gear to be guided to the holding portion.

According to yet another aspect of the power transmission device according to the present invention, the first gear mechanism includes a meshing gear that meshes with the scooping up gear. The scooping up gear and the meshing gear are configured to cause the lubricating oil splashed from a meshing section between the scooping up gear and the meshing gear to rotate in a direction toward the bottom portion of the case member. The guiding portion further includes a guiding wall configured to guide to the holding portion, of the lubricating oil splashed from the meshing section, at least some of lubricating oil moving along with the rotation of the meshing gear, and to guide to the holding portion at least some of lubricating oil that has been scooped up by the rotation in a first rotational direction of the driving gear.

According to this aspect, at least some of the lubricating oil splashed from the meshing section between the scooping up gear and the meshing gear and caused to rotate along with the rotation of the meshing gear and at least some of the lubricating oil that has been scooped up by the rotation in the first rotational direction of the driving gear are guided to the holding portion, which can effectively prevent depletion of the lubricating oil held in the holding portion. In this configuration, the lubrication with the lubricating oil scooped up by the scooping up gear can be more stably ensured.

Moreover, when viewed from an axial direction, the first input shaft, the coupling shaft, the second input shaft, and the drive shaft are disposed such that a first virtual connecting line connecting an axial center of the first input shaft and an axial center of the coupling shaft, and a second virtual connecting line connecting an axial center of the second input shaft and an axial center of the drive shaft form a substantial inverse V shape. These members are configured such that the second input shaft is disposed closer to an apex of the substantial inverse V shape than the drive shaft. In addition, the meshing gear and the scooping up gear are disposed on the first virtual connecting line, and are configured such that the meshing gear is disposed closer to the apex of the substantial inverse V shape than the scooping up gear. The holding portion includes a circular arc portion and an extending portion, and is an isolating wall separating the scooping up gear and the bottom portion of the case member. The circular arc portion is disposed below the scooping up gear and has substantially the same curvature as the curvature of the scooping up gear. The extending portion extends substantially in parallel to the first virtual connecting line from one end of the circular arc portion to below the meshing gear. Further, when viewed from the axial direction, the guiding wall is disposed in a position corresponding to a position between the meshing gear and the extending portion and separates the meshing gear and the driving gear. Furthermore, the guiding wall is configured such that one end thereof overlaps with the extending portion in an extending direction of the extending portion.

Thus, in the power transmission device in which the first input shaft, the coupling shaft, the second input shaft, and the drive shaft are disposed such that the first virtual connecting line and the second virtual connecting line form the substantially inverse V shape when viewed from the axial direction, the effects of the present invention can be made even more evident. Note that, in this configuration, the guiding wall and the extending portion are overlapped with each other, which enables the lubricating oil that is caused to rotate along with the meshing gear and impinges on the guiding wall and the lubricating oil that is scooped up by the driving gear and impinges on the guiding wall to be efficiently guided to the holding portion. In this configuration, the depletion of the lubricating oil held in the holding portion can be more effectively prevented. As a result, the lubrication with the lubricating oil scooped up by the scooping up gear can be even more stably ensured.

Furthermore, the holding portion has the circular arc portion, and thus the smooth scooping up of the lubricating oil by the scooping up gear can be realized. In addition, the holding portion has the extending portion, and thus the lubricating oil scooped up by the driving gear and led to the holding portion can be smoothly guided to the circular arc portion.

According to yet another aspect of the power transmission device according to the present invention, the guiding wall is in an arc shape along the meshing gear.

According to this aspect, the lubricating oil that is scooped up by the driving gear and impinges on the guiding wall can be guided toward the holding portion.

According to yet another aspect of the power transmission device according to the present invention, the power transmission device further includes a second guiding wall configured to guide, to the guiding wall, the lubricating oil that has been scooped up by the rotation in the first rotational direction of the driving gear. Further, the second guiding wall is connected to the extending portion.

According to this aspect, the lubricating oil scooped up by the rotation in the first rotational direction of the driving gear can be efficiently guided to the guiding wall. Furthermore, the second guiding wall is connected to the extending portion, which enables the lubricating oil that has impinged on the guiding wall to be efficiently guided to the holding portion.

According to yet another aspect of the power transmission device according to the present invention, the second gear mechanism includes a motor gear fixed to the second input shaft, the driving gear, a first intermediate gear that meshes with the motor gear, a rotation shaft of the first intermediate gear, and a second intermediate gear that is fixed to the rotation shaft of the first intermediate gear and that meshes with the driving gear. Furthermore, the second gear mechanism is configured to cause the lubricating oil that has been scooped up by the rotation in a second rotational direction of the driving gear and splashed from a meshing section between the driving gear and the second intermediate gear to move toward the guiding wall. Further, the guiding wall is configured such that the other end thereof extends to a position intersecting a tangential line with respect to the meshing section between the driving gear and the second intermediate gear.

According to this aspect, the lubricating oil scooped up by the rotation in the second rotational direction of the driving gear and splashed from the meshing section between the driving gear and the second intermediate gear can be effectively caused to impinge on the guiding wall. In this configuration, the amount of lubricating oil guided to the holding portion can be increased.

According to yet another aspect of the power transmission device according to the present invention, the power transmission device further includes a third guiding wall configured to guide, to the meshing section between the driving gear and the second intermediate gear, the lubricating oil that has been scooped up by the rotation in the second rotational direction of the driving gear.

According to this aspect, the lubricating oil can be efficiently guided to the meshing section between the driving gear and the second intermediate gear.

According to yet another aspect of the power transmission device according to the present invention, the protruding wall portion is disposed directly above a position between a rotational center of the scooping up gear, and a rotational center of the meshing gear. Note that the protruding wall portion can also be disposed directly above the rotational center of the meshing gear.

According to this aspect, the lubricating oil that flows down along the protruding wall portion and impinges on the scooping up gear and the meshing gear easily rotates together in the rotational direction of the scooping up gear and the meshing gear, and thus, the amount of lubricating oil splashed from the meshing section between the scooping up gear and the meshing gear can be increased, and the guiding of the lubricating oil to the holding portion via the protruding wall portion can be more effectively performed.

According to yet another aspect of the power transmission device according to the present invention, the first gear mechanism further includes a second meshing gear that meshes with the scooping up gear. The meshing gear is fixed to one of the first input shaft and the coupling shaft. Furthermore, the second meshing gear is fixed to the other of the first input shaft and the coupling shaft. In addition, the holding portion includes a second circular arc portion disposed below the second meshing gear and extending along the second meshing gear, and separates the second meshing gear and the bottom portion of the case member. Further, the second circular arc portion is connected to the other end of the circular arc portion.

According to this aspect, in the power transmission device configured such that the first input shaft and the rotation shaft of the power generator are connected by the first gear mechanism having a gear ratio of two stages or more, the lubrication of the first gear mechanism can be improved.

According to yet another aspect of the power transmission device according to the present invention, the circular arc portion includes a through portion configured to allow, of the interior space of the case member, a space in which the scooping up gear is disposed and a space in which the bottom portion is disposed to communication with each other.

According to this aspect, the rotation of the scooping up gear enables the vicinity of the through portion in the space of the case member in which the scooping up gear is disposed to have negative pressure lower than that of the space in which the bottom portion of the case member is disposed, which enables the lubricating oil stored in the bottom portion to be led to the holding portion via the through portion.

According to a preferable aspect of the power output device according to the present invention, the power output device includes: an internal combustion engine; a power generator that generates power with driving of the internal combustion engine; a motor driven by the power generated by the power generator; a drive shaft through which power from the motor is output; and the power transmission device according to any of the above aspects of the present invention that connects the internal combustion engine and the power generator, and connects the motor and the drive shaft.

According to the present invention, the configuration uses the power transmission device according to any one of the above-described aspects of the present invention. As such, the same effects as those provided by the power transmission device of the present invention are made possible, such as the effect of enabling the reduction in the number of parts and in the size of the device and ensuring the lubrication of each part of the device.

### Advantageous Effects of Invention

According to the present invention, a technique that enables the reduction in the number of parts and in the size of the device and ensures the lubrication of each part of the device can be provided.

### Brief Description of Drawings

FIG. 1 is a configuration diagram illustrating an overview of a configuration of a power output device 1 according to an embodiment of the present invention.
FIG. 2 is an explanation view illustrating a configuration of an engine 2 side power transmission path of a power transmission device 20, as seen from a direction corresponding to a cross section A-A in FIG. 8.
FIG. 3 is an explanation view illustrating a configuration of a motor 4 side power transmission path of the power transmission device 20, as seen from a direction corresponding to a cross section B-B in FIG. 8.
FIG. 4 is a perspective view of a housing 32.
FIG. 5 is a front view of the housing 32.
FIG. 6 is a perspective view of a case body 34.
FIG. 7 is a front view of the case body 34.
FIG. 8 is an explanation view of the power transmission device 20 with the case body 34 removed, as seen from an axial direction.
FIG. 9 is a perspective view of the power transmission device 20 with the case body 34 removed.
FIG. 10 is a perspective cross-sectional view illustrating a cross section V-V in FIG. 1.
FIG. 11 is a cross-sectional view illustrating a cross section W-W in FIG. 1.
FIG. 12 is an explanation view illustrating a state of lubricating oil when a vehicle having the power output device 1 installed therein is traveling forward on a flat road.
FIG. 13 is an explanation view illustrating a state of lubricating oil when the vehicle having the power output device 1 installed therein is traveling in reverse on a flat road.
FIG. 14 is an explanation view illustrating a state of lubricating oil when the vehicle having the power output device 1 installed therein is traveling forward on an uphill road.
FIG. 15 is an explanation view illustrating a state of lubricating oil when the vehicle having the power output device 1 installed therein is traveling in reverse on an uphill road.
FIG. 16 is a configuration diagram illustrating an overview of a configuration of the power transmission device 20 according to a modified example.
FIG. 17 is a configuration diagram illustrating an overview of a configuration of the housing 32 according to a modified example.

### Description of Embodiments

Next, a preferred embodiment of the present invention will be described with reference to examples.

### Example

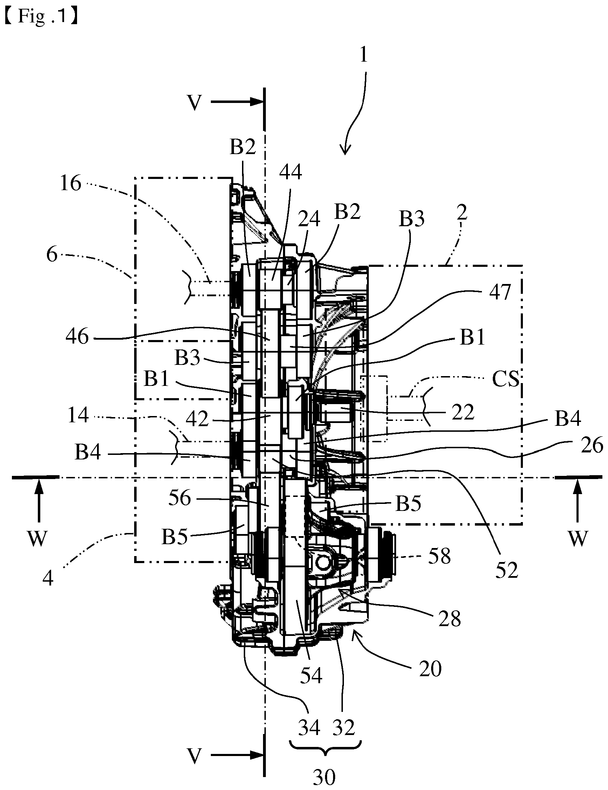

As illustrated in FIG. 1, a power output device 1 according to an embodiment of the present invention is provided with a power transmission device 20 according to the embodiment of the present invention, and an engine 2, a motor 4, and a power generator 6 that are connected to the power transmission device 20.

The engine 2 is configured as an internal combustion engine that outputs power using a hydrocarbon-based fuel, such as gasoline or diesel fuel. The engine 2 causes a piston (not illustrated) to reciprocate using combustion pressure generated in a combustion chamber that is not illustrated, and outputs power by converting the reciprocating motion of the piston into a rotary motion of a crank shaft CS.

The motor 4 is provided with a rotor (not illustrated) that is fixed to a motor rotation shaft 14, and with a stator (not illustrated) that is coaxial with and surrounds the rotor. The motor 4 is configured as both an electric motor that can provide driving force and as a three-phase alternating current synchronous generator motor that can generate power as a power generator. The motor 4 is driven by power supplied from a battery, which is not illustrated, via an inverter (not illustrated).

The power generator 6 is provided with a rotor (not illustrated) that is fixed to a power generator rotation shaft 16, and with a stator (not illustrated) that is coaxial with and surrounds the rotor. The power generator 6 is configured as a three-phase alternating current synchronous power generator that generates power as a result of the power generator rotation shaft 16 being rotated by the engine 2. The power generated by the power generator 6 is stored in a battery (not illustrated) via an inverter that is not illustrated.

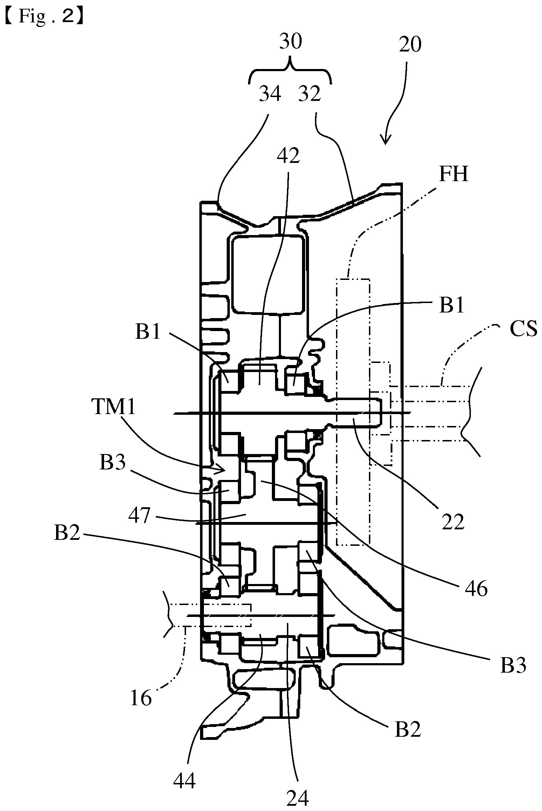

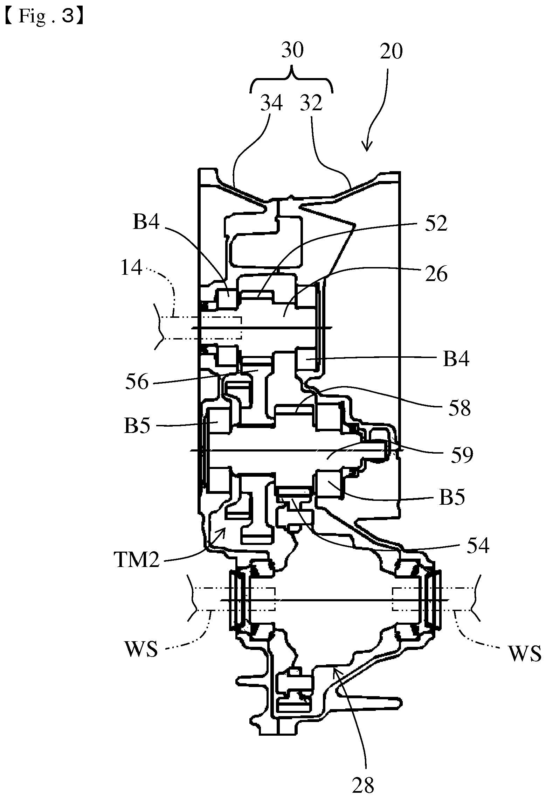

As illustrated in FIG. 2, the power transmission device 20 is provided with: a first input shaft 22 that is connected to the crank shaft CS via a flywheel FH; a first output shaft 24 that is connected to the power generator rotation shaft 16; a first gear mechanism TM1 that connects the first input shaft 22 and the first output shaft 24; and, as illustrated in FIG. 3, with a second input shaft 26 that is connected to the motor rotation shaft 14; a differential device 28 to which wheel shafts WS are connected; a second gear mechanism TM2 that connects the second input shaft 26 and the differential device 28; and a gear case 30 that houses these members.

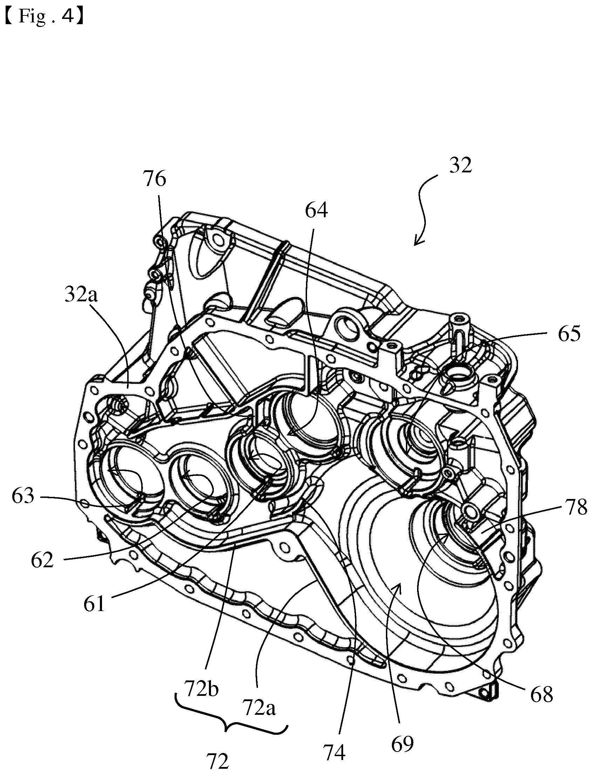

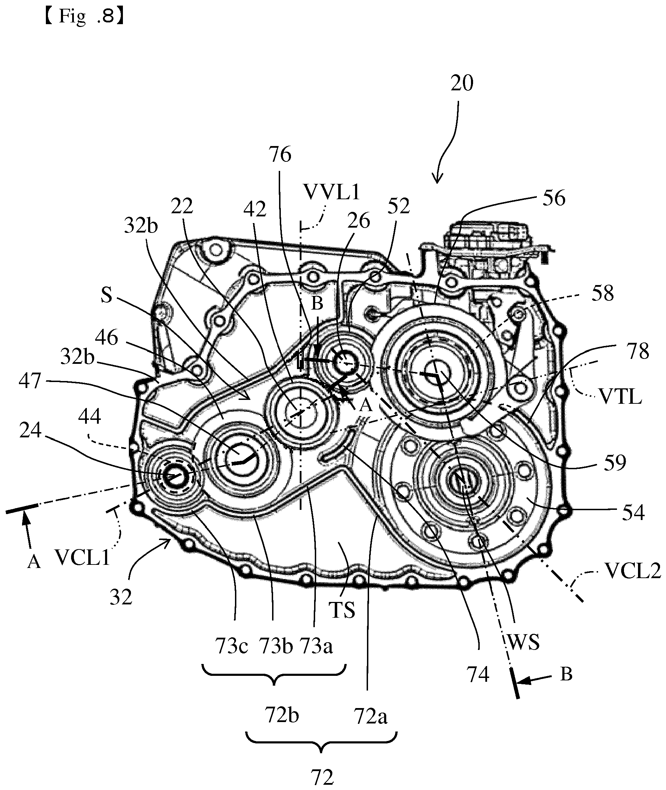

In this example configuration, the crank shaft CS corresponds to an "output shaft of an internal combustion engine" of the present invention, and the wheel shaft WS corresponds to a "drive shaft" of the present invention. Note that, in the present embodiment, for ease of explanation, upper sides of the pages of FIG. 4 and FIG. 8 are each defined as an "upper side" or "upward," and lower sides of the pages of FIG. 4 and FIG. 8 are each defined as a "lower side" or "downward." Furthermore, right sides of the pages of FIG. 4 and FIG. 8 are each defined as a "right side" or "rightward," and left sides of the pages of FIG. 4 and FIG. 8 are each defined as a "left side" or "leftward."

As illustrated in FIG. 2, the first input shaft 22 is rotatably supported on the gear case 30 via bearings B1 and B1. A spline protrusion is formed on the outer circumferential surface of one end side (the right side of FIG. 2) of the first input shaft 22, and the flywheel FH is fitted onto the spline protrusion.

Furthermore, the first output shaft 24 is rotatably supported on the gear case 30 via bearings B2 and B2. An axial center hole is formed in the axial center of one end side (the left side of FIG. 2) of the first output shaft 24, and a spline recess is formed in the inner circumferential surface of the axial center hole. The power generator rotation shaft 16 is fitted onto the spline recess. In this example configuration, the first output shaft 24 corresponds to a "coupling shaft" of the present invention.

As illustrated in FIG. 2, the first gear mechanism TM1 is constituted of a first input gear 42 that is integrally formed with the first input shaft 22, a first output gear 44 that is integrally formed with the first output shaft 24, a first idler gear 46 that meshes with the first input gear 42 and the first output gear 44, and a first idler shaft 47 that is integrally formed with the first idler gear 46. The first gear mechanism TM1 transmits the rotation of the crank shaft CS to the power generator rotation shaft 16. In this example configuration, the first input gear 42 corresponds to a "meshing gear" of the present invention, the first output gear 44 corresponds to a "second meshing gear" of the present invention, and the first idler gear 46 corresponds to a "scooping up gear" of the present invention.

Furthermore, as illustrated in FIG. 2, the first output gear 44 is smaller in diameter than the first input gear 42 and the first idler gear 46, which allows the first gear mechanism TM1 to transmit the rotation of the crank shaft CS to the power generator rotation shaft 16 with an increased rotation speed. Note that the first idler shaft 47 is rotatably supported on the gear case 30 via bearings B3 and B3.

As illustrated in FIG. 3, the second input shaft 26 is rotatably supported on the gear case 30 via bearings B4 and B4. An axial center hole is formed in the axial center of one end side (the left side of FIG. 3) of the second input shaft 26, and a spline recess is formed in the inner circumferential surface of the axial center hole. The motor rotation shaft 14 is fitted onto the spline recess.

As illustrated in FIG. 3, the second gear mechanism TM2 is constituted of a second input gear 52 that is integrally formed with the second input shaft 26, a ring gear 54 that is fixed by bolts to the differential device 28, a second idler gear 56 that meshes with the second input gear 52, a third idler gear 58 that meshes with the ring gear 54, and a second idler shaft 59 to which the second idler gear 56 is fixed and which is integrally formed with the third idler gear 58. The second gear mechanism TM2 transmits the rotation of the motor rotation shaft 14 to the wheel shafts WS and WS.

In this example configuration, the second input gear 52 corresponds to a "motor gear" of the present invention, and the ring gear 54 corresponds to a "driving gear" of the present invention. Furthermore, in this example configuration, the second idler gear 56 corresponds to a "first intermediate gear" of the present invention, and the third idler gear 58 corresponds to a "second intermediate gear" of the present invention. Furthermore, in this example configuration, the second idler shaft 59 corresponds to a "rotation shaft of the first intermediate gear" of the present invention.

In addition, as illustrated in FIG. 3, the second idler gear 56 is larger in diameter than the second input gear 52 and the third idler gear 58, and the third idler gear 58 is smaller in diameter than the ring gear 54, which allows the second gear mechanism TM2 to transmit the rotation of the motor rotation shaft 14 to the wheel shafts WS and WS with a decreased rotation speed. Note that the second idler shaft 59 is rotatably supported on the gear case 30 via bearings B5 and B5.

As illustrated in FIG. 3, the differential device 28 having the wheel shafts WS and WS spline-fitted thereto is configured to distribute and transmit power to the left and right wheel shafts WS and WS while absorbing speed differences (rotational speed differences) that occur between the left and right wheel shafts WS and WS.

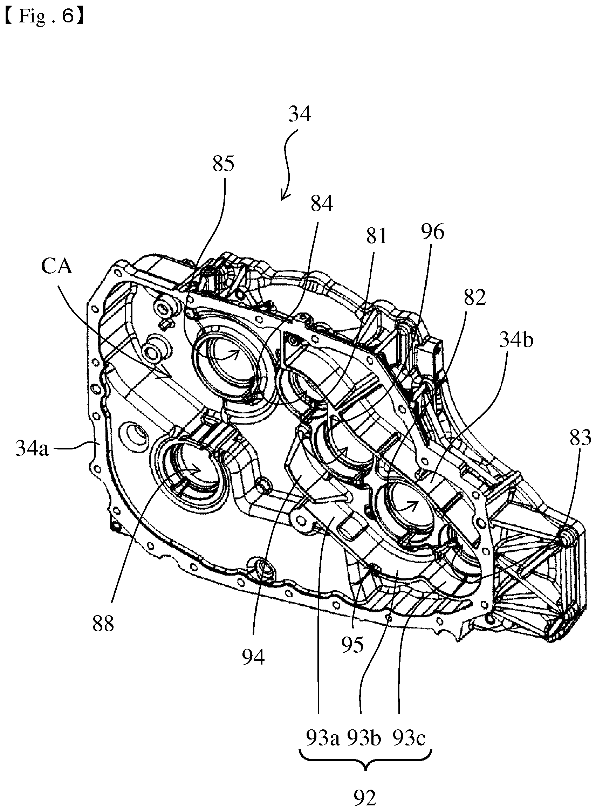

As illustrated in FIGS. 1 to 3, the gear case 30 is constituted of a housing 32 and a case body 34. Fastening together a fastening flange portion 32a (see FIG. 4) of the housing 32 and a fastening flange portion 34a (see FIG. 6) of the case body 34 creates an interior space for housing the first input shaft 22, the first output shaft 24, the first gear mechanism TM1, the second input shaft 26, the differential device 28, and the second gear mechanism TM2. Lubricating oil is stored in a lower portion of the interior space. In this example configuration, the gear case 30 corresponds to a "case member" of the present invention.

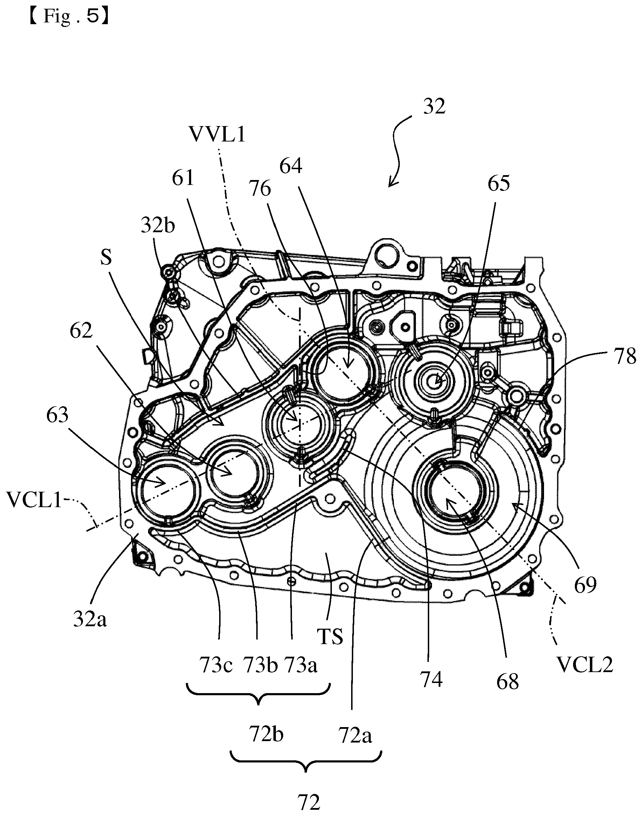

As illustrated in FIG. 4 and FIG. 5, the housing 32 has attachment holes 61, 62, 63, 64, 65, and 68 formed therein, and has a space 69 on the fastening flange portion 32a side of the attachment hole 68.

The bearings B1, B2, B3, B4, and B5, each of which is one of the corresponding pair of bearings, are attached to the attachment holes 61, 62, 63, 64, 65, and 68. As illustrated in FIG. 5, the attachment hole 61 is formed in substantially a central portion of the housing 32, and the attachment holes 62 and 63 are formed in that order on an oblique line extending from the attachment hole 61 toward the lower left side of FIG. 5. More specifically, the attachment holes 61, 62, and 63 are disposed substantially along a first virtual connecting line VCL1 (a straight line having a downward inclination to the left side of FIG. 5) that connects the center of the attachment hole 61 and the center of the attachment hole 63.

Furthermore, as illustrated in FIG. 5, the attachment hole 64 is formed in close proximity to the upper right side of the attachment hole 61 in FIG. 5, and the attachment holes 65 and 68 are formed in that order on an oblique line extending from the attachment hole 64 to the lower right side of FIG. 5. The attachment hole 65 is disposed such that the center thereof is in a position above a second virtual connecting line VCL2 (a straight line having a downward inclination toward the right in FIG. 5) that connects the center of the attachment hole 64 and the center of the attachment hole 68.

In addition, the space 69 is configured as a substantially truncated cone-shaped concave section that can house most of the differential device 28.

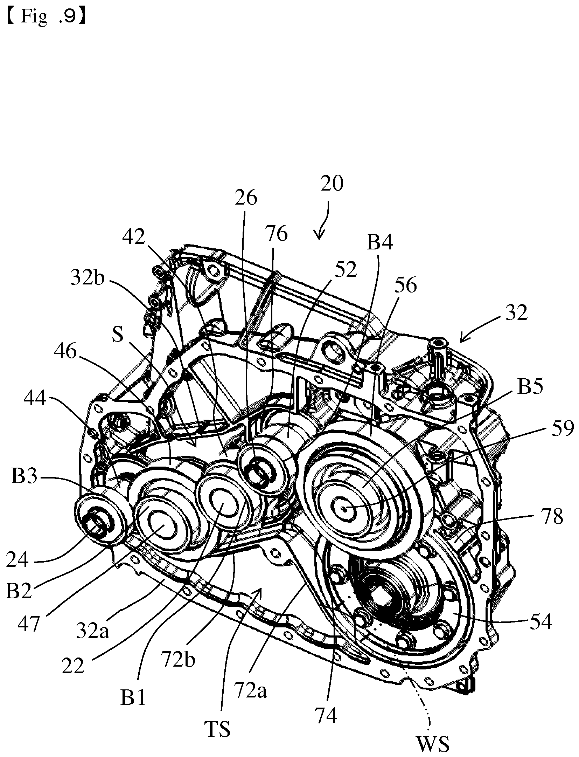

In this way, as illustrated in FIG. 8 and FIG. 9, the housing 32 is configured such that the first input shaft 22, the first idler shaft 47, and the first output shaft 24 (arranged in an extending direction of the first virtual connecting line VCL1) that configure the engine 2 side power transmission path, and the second input shaft 26, the second idler shaft 59, and the wheel shaft WS (arranged in an extending direction of the second virtual connecting line VCL2) that configure the motor 4 side power transmission path, are disposed in a substantial inverse V shape when viewed from the axial direction.

Furthermore, as illustrated in FIG. 5, the housing 32 is provided with a chevron-shaped rib 72, a circular arc rib 74, a vertically extending rib 76, and a covering rib 78.

The chevron-shaped rib 72 is constituted of a first oblique rib 72a and a second oblique rib 72b, and the first oblique rib 72a and the second oblique rib 72b are connected to each other so as to form a substantial inverse V shape when viewed in the direction of the page of FIG. 5. Furthermore, the chevron-shaped rib 72 has the same height as the fastening flange portion 32a when viewed in the direction perpendicular to the page of FIG. 5. In other words, an upper edge face in the height direction of the chevron-shaped rib 72 and a flange face of the fastening flange portion 32a are formed flush with each other.

As illustrated in FIG. 5, the first oblique rib 72a has one end thereof connected to a lower wall portion of the housing 32 positioned directly below the attachment hole 68. Further, as illustrated in FIG. 8, the first oblique rib 72a extends from the lower wall portion along an outer circumferential surface of the ring gear 54 and then extends in a direction tangential to the ring gear 54 (substantially parallel to the second virtual connecting line VCL2). In this example configuration, the first oblique rib 72a corresponds to a "second guiding wall" of the present invention.

As illustrated in FIG. 5, one end of the second oblique rib 72b is connected to the first oblique rib 72a, and the other end is connected to an intersection portion of a left side wall portion and the lower wall portion of the housing 32. As illustrated in FIG. 8, the second oblique rib 72b is constituted of a straight line portion 73a that is connected to the first oblique rib 72a, is substantially parallel to the first virtual connecting line VCL1 and extends in a direction tangential to the first idler gear 46, a first circular arc portion 73b that extends along an outer circumferential surface of the first idler gear 46, and a second circular arc portion 73c that extends along an outer circumferential surface of the first output gear 44.

One end of the straight line portion 73a is connected to the first oblique rib 72a and the other end thereof is connected to the first circular arc portion 73b, while an end of the first circular arc portion 73b on the opposite side to the end connected to the straight line portion 73a is connected to the second circular arc portion 73c. Furthermore, an end of the second circular arc portion 73c on the opposite side to the end connected to the first circular arc portion 73b is connected to the intersection portion of the left side wall portion and the lower wall portion of the housing 32.

In this this example configuration, the second oblique rib 72b corresponds to a "holding portion" and an "isolating wall" of the present invention. Furthermore, in this example configuration, the lower wall portion of the housing 32 corresponds to a "bottom portion of the case member" of the present invention. In this this example configuration, the straight line portion 73a corresponds to an "extending portion" of the present invention, the first circular arc portion 73b corresponds to a "circular arc portion" of the present invention, and the second circular arc portion 73c corresponds to a "second circular arc portion" of the present invention.

As illustrated in FIG. 5, the circular arc rib 74 is disposed so as to partition the attachment hole 61 and the attachment hole 68 at a position between the attachment hole 61 and the straight line portion 73a. In other words, as illustrated in FIG. 8, the circular arc rib 74 extends along the outer circumferential surface of the first input gear 42, so as to separate the first input gear 42 and the ring gear 54 at a position between the first input gear 42 and the straight line portion 73a.

Furthermore, as illustrated in FIG. 5 and FIG. 8, the circular arc rib 74 is configured such that one end thereof in the extending direction overlaps with the straight line portion 73a in the extending direction of the straight line portion 73a. Further, as illustrated in FIG. 8, the circular arc rib 74 is configured such that the other end thereof in the extending direction extends to a tangential line VTL with respect to a meshing section between the ring gear 54 and the third idler gear 58.

In addition, the circular arc rib 74 has the same height as the fastening flange portion 32a when viewed in the direction perpendicular to the page of FIG. 5. In other words, an upper edge face in the height direction of the circular arc rib 74 and the flange face of the fastening flange portion 32a are formed flush with each other. In this example configuration, the circular arc rib 74 corresponds to a "guiding portion" and a "guiding wall" of the present invention.

As illustrated in FIG. 5, the vertically extending rib 76 is integrally formed with a breather forming wall section 32b that defines a breather chamber, and is formed extending vertically downward from a position directly above the center of the attachment hole 61.

Furthermore, the vertically extending rib 76 has the same height as the fastening flange portion 32a when viewed in the direction perpendicular to the page of FIG. 5. In other words, an upper edge face in the height direction of the vertically extending rib 76 and the flange face of the fastening flange portion 32a are formed flush with each other. In this example configuration, the vertically extending rib 76 corresponds to a "protruding wall portion" of the present invention.

The breather forming wall section 32b is integrally formed with an upper wall portion of the housing 32, and has the same height as the fastening flange portion 32a when viewed in the direction perpendicular to the page of FIG. 5. With this configuration, an upper edge face in the height direction of the breather forming wall section 32b and the flange face of the fastening flange portion 32a are formed flush with each other. As illustrated in FIG. 8, the breather forming wall section 32b is configured such that a wall surface thereof that faces the outer circumferential surfaces of the first and second input gears 42 and 52, and the first idler gear 46 extends substantially in parallel to the first virtual connecting line VCL1. In this example configuration, the breather forming wall section 32b corresponds to an "upper interior wall surface" of the present invention.

As illustrated in FIG. 8, the covering rib 78 extends from a substantially central portion in the vertical direction of a right side wall portion of the housing 32, along the outer circumferential surface of the ring gear 54, toward the meshing section between the ring gear 54 and the third idler gear 58. In this example configuration, the covering rib 78 corresponds to a "third guiding wall" of the present invention.

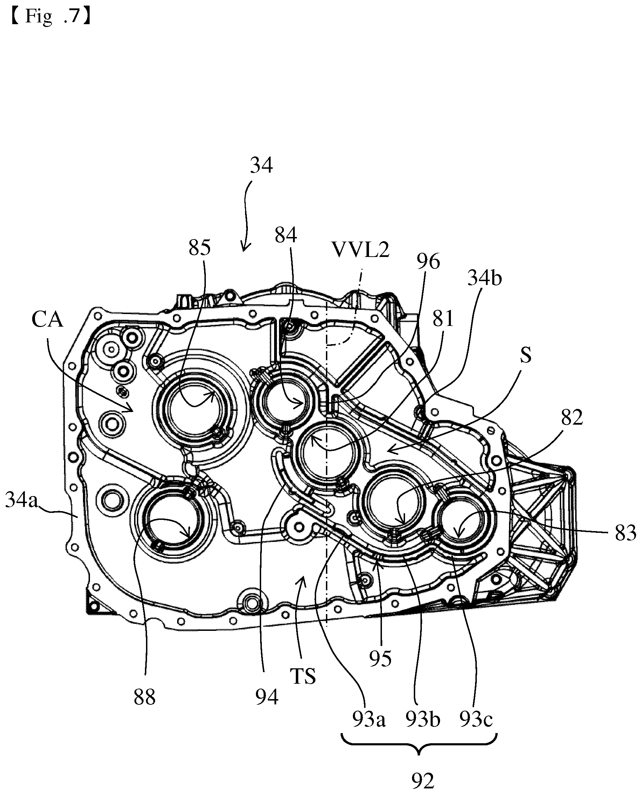

As illustrated in FIG. 6 and FIG. 7, attachment holes 81, 82, 83, 84, 85, and 88 are formed in the case body 34, in positions corresponding to the attachment holes 61, 62, 63, 64, 65, and 68 formed in the housing 32. The bearings B1, B2, B3, B4, and B5, each of which is the other of the corresponding pair of bearings, are attached to the attachment holes 81, 82, 83, 84, 85, and 88.

In other words, as with the housing 32, the case body 34 is configured such that the first input shaft 22, the first idler shaft 47, and the first output shaft 24 (arranged in the extending direction of the first virtual connecting line VCL1) that configure the engine 2 side power transmission path, and the second input shaft 26, the second idler shaft 59, and the wheel shaft WS (arranged in the extending direction of the second virtual connecting line VCL2) that configure the motor 4 side power transmission path, are disposed in a substantial inverse V shape when viewed from the axial direction.

Furthermore, as illustrated in FIG. 6, the case body 34 is configured such that a section thereof in which the attachment hole 88 is formed is a step higher than the other sections. In other words, the section of the case body 34 in which the attachment holes 81, 82, 83, 84, and 85 are formed is in a concave shape. The section, namely, a concave area CA, houses the first input gear 42, the first idler gear 46, the first output gear 44, the second input gear 52, and the second idler gear 56.

In addition, as illustrated in FIG. 6 and FIG. 7, the case body 34 is provided with an oblique rib 92, a circular arc rib 94, and a vertically extending rib 96. In this example configuration, the oblique rib 92 corresponds to a "holding portion" and an "isolating wall" of the present invention, the circular arc rib 94 corresponds to a "guiding portion" and a "guiding wall" of the present invention, and the vertically extending rib 96 corresponds to a "protruding wall portion" of the present invention.

The oblique rib 92 is formed in a position facing the second oblique rib 72b of the chevron-shaped rib 72 formed on the housing 32, and, as illustrated in FIG. 6 and FIG. 7, is constituted of a straight line portion 93a, a first circular arc portion 93b and a second circular arc portion 93c that respectively correspond to the straight line portion 73a, the first circular arc portion 73b and the second circular arc portion 73c of the second oblique rib 72b.

In other words, the straight line portion 93a extends in a direction tangential to the first idler gear 46, the first circular arc portion 93b is configured along the outer circumferential surface of the first idler gear 46, and the second circular arc portion 93c is configured along the outer circumferential surface of the first output gear 44. In this example configuration, the straight line portion 93a corresponds to the "extending portion" of the present invention, the first circular arc portion 93b corresponds to the "circular arc portion" of the present invention, and the second circular arc portion 93c corresponds to the "second circular arc portion" of the present invention.

Furthermore, as illustrated in FIG. 6 and FIG. 7, a notch 95 is formed in the oblique rib 92. The notch 95 is formed by cutting out a portion in the vicinity of a connecting portion of the straight line portion 93a and the first circular arc portion 93b, of an upper edge face in the height direction of the oblique rib 92. In this example configuration, the notch 95 corresponds to a "through portion" of the present invention.

Note that the oblique rib 92 has the same height as the fastening flange portion 34a when viewed in the direction perpendicular to the page of FIG. 7. In other words, the upper edge face in the height direction of the oblique rib 92 and a flange face of the fastening flange portion 34a are formed flush with each other.

The circular arc rib 94 is formed in a position facing the circular arc rib 74 formed on the housing 32. In other words, the circular arc rib 94 extends along the outer circumferential surface of the first input gear 42, and is also configured such that one end thereof overlaps with the straight line portion 93a in the extending direction of the straight line portion 93a.

Note that the circular arc rib 94 has the same height as the fastening flange portion 34a when viewed in the direction perpendicular to the page of FIG. 7. In other words, an upper edge face in the height direction of the circular arc rib 94 and the flange face of the fastening flange portion 34a are formed flush with each other.

The vertically extending rib 96 is formed in a position facing the vertically extending rib 76 formed on the housing 32. In other words, as illustrated in FIG. 7, the vertically extending rib 96 is integrally formed with a breather forming wall section 34b that defines the breather chamber, and is formed in a hanging shape vertically downward from a position directly above the center of the attachment hole 81.

Furthermore, the vertically extending rib 96 has the same height as the fastening flange portion 34a when viewed in the direction perpendicular to the sheet of FIG. 7. In other words, an upper edge face in the height direction of the vertically extending rib 96 and the flange face of the fastening flange portion 34a are formed flush with each other.

The breather forming wall section 34b is integrally formed with an upper wall portion of the case body 34, and has the same height as the fastening flange portion 34a when viewed in the direction perpendicular to the sheet of FIG. 7. With this configuration, an upper edge face in the height direction of the breather forming wall section 34b and the flange face of the fastening flange portion 34a are formed flush with each other. Similar to the breather forming wall section 32b, the breather forming wall section 34b is configured such that a wall surface thereof that faces the outer circumferential surfaces of the first and second input gears 42 and 52, and the first idler gear 46 extends substantially in parallel to the first virtual connecting line VCL1. In this example configuration, the breather forming wall section 34b corresponds to the "upper interior wall surface" of the present invention.

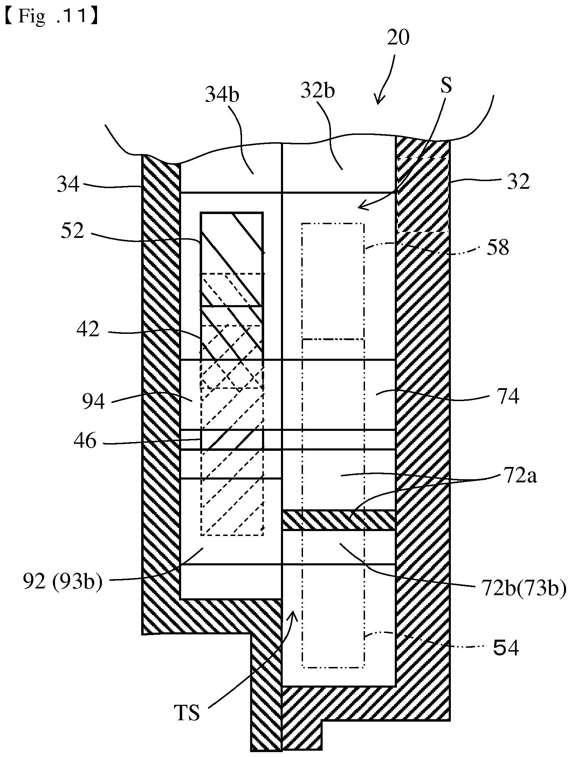

As illustrated in FIG. 11, fastening together, with bolts, the housing 32 and the case body 34 configured in this manner allows the second oblique rib 72b of the chevron-shaped rib 72 of the housing 32 and the oblique rib 92 of the case body 34, the circular arc rib 74 of the housing 32 and the circular arc rib 94 of the case body 34, the vertically extending rib 76 of the housing 32 and the vertically extending rib 96 (not illustrated in FIG. 11) of the case body 34, and the breather forming wall section 32b of the housing 32 and the breather forming wall section 34b of the case body 34 to come into contact with each other, respectively.

With this configuration, a region S is configured in which disposed are the first input gear 42, the first idler gear 46, and the first output gear 44 that configure the engine 2 side power transmission path of the internal space of the gear case 30. The region S is configured as a closed space that is closed except for one side (the first input shaft 22 side, the right side of FIG. 8) in the arrangement direction of the first input shaft 22, the first idler shaft 47, and the first output shaft 24 (the extending direction of the first virtual connecting line VCL1), by the breather forming wall sections 32b and 34b, the second oblique rib 72b and the oblique rib 92, the circular arc ribs 74 and 94, and the vertically extending ribs 76 and 96.

More specifically, the region S is formed in an inclined U shape that extends in a direction along the first virtual connecting line VCL1 when viewed from the axial direction of each of the shafts.

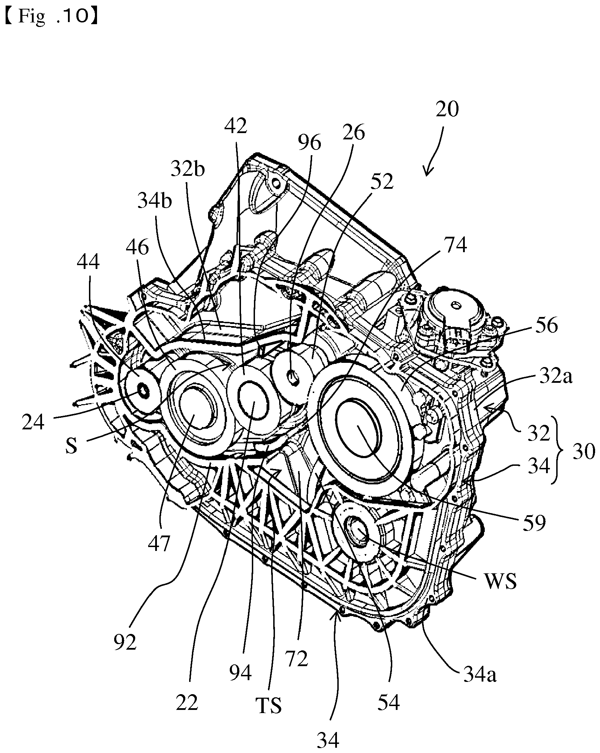

Thus, as illustrated in FIG. 8 and FIG. 10, the region S is separated from a triangular-shaped space TS that is configured, in a lower portion of the internal space of the gear case 30, by the chevron-shaped rib 72 and the oblique rib 92. Note that, as illustrated in FIG. 7, the region S communicates to the space TS via the notch 95 formed in the oblique rib 92.

A vehicle having the power output device 1 configured in this manner installed therein is driven in modes such as: a power generation motor driving mode in which the motor 4 is driven with power generated by the power generator 6 being driven by the engine 2, a discharge motor driving mode in which the motor 4 is driven with power supplied from a secondary battery without causing the power generator 6 to generate power, and a charging mode in which the secondary battery is charged with power generated by the power generator 6 being driven by the engine 2 without driving the motor 4.

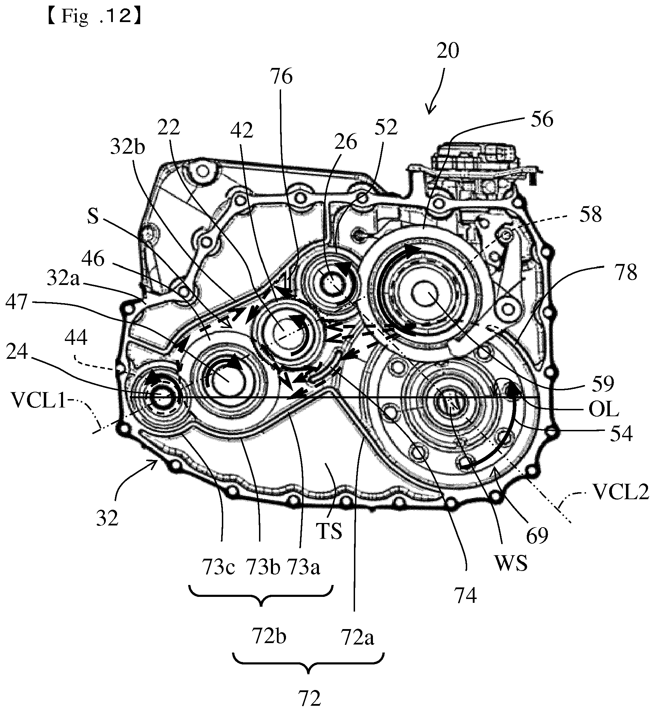

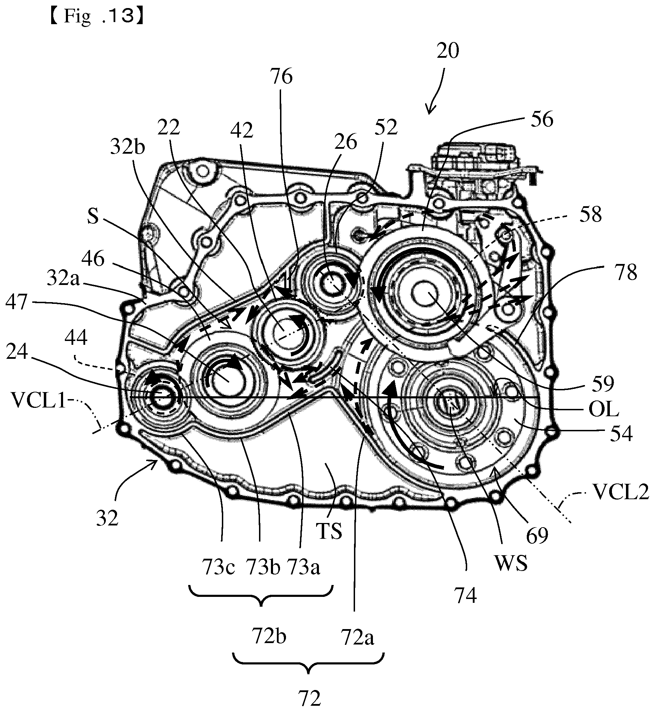

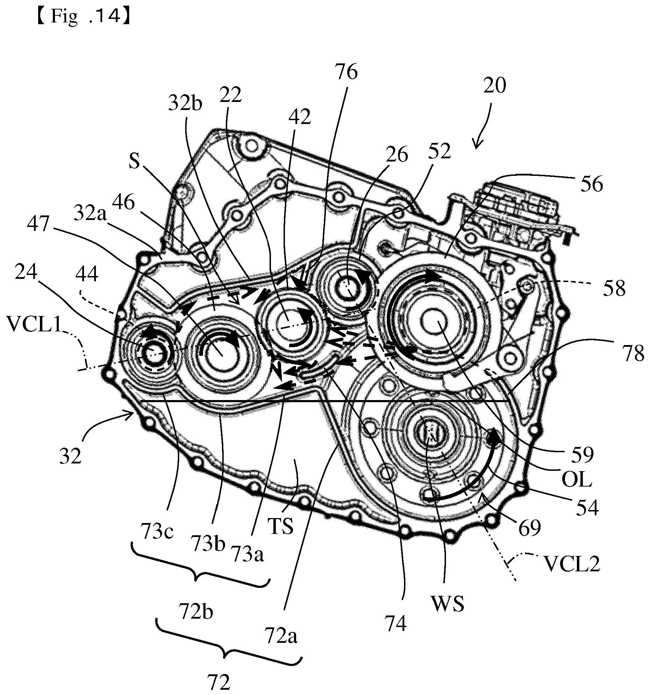

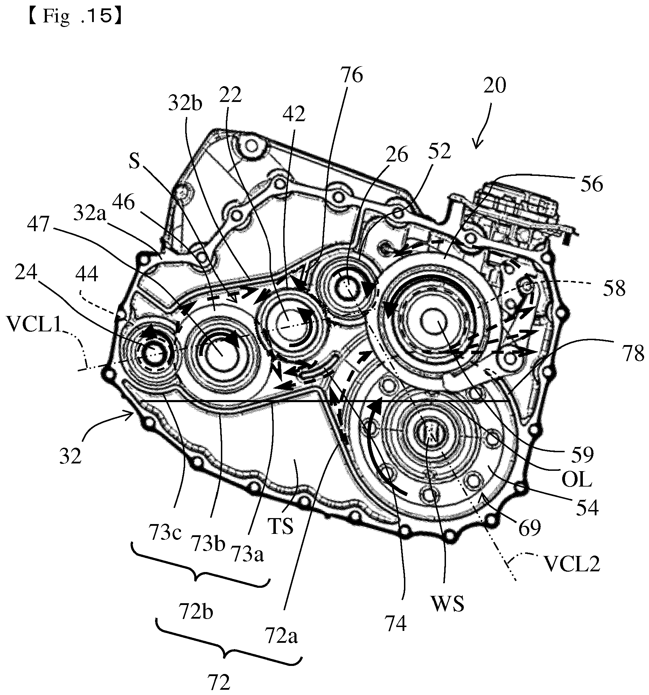

Next, described is movement of the lubricating oil supplied to each of the parts constituting the power transmission device 20 during travel of the vehicle provided with the power output device 1 configured in this manner. First, the movement of the lubricating oil when the vehicle is being driven on a flat road will be described, and then the movement of the lubricating oil when the vehicle is driven on an uphill road will be described. Note that, in the present embodiment, when the vehicle having the power output device 1 installed therein is traveling forward, the motor rotation shaft 14 is rotated in the counterclockwise direction, as illustrated in FIG. 12 and FIG. 14, and when the vehicle is traveling in reverse, the motor rotation shaft 14 is rotated in the clockwise direction, as illustrated in FIG. 13 and FIG. 15.

Furthermore, the crank shaft CS, and more specifically, the first input shaft 22, is configured to rotate in the counterclockwise direction, as illustrated in FIGS. 12 to 15. In this example configuration, a state in which the ring gear 54 is rotated in the counterclockwise direction along with the motor rotation shaft 14 being rotated in the counterclockwise direction corresponds to a "rotation of in the first rotational direction the driving gear" of the present invention, and a state in which the ring gear 54 is rotated in the clockwise direction along with the motor rotation shaft 14 being rotated in the clockwise direction corresponds to a "rotation in the second rotational direction of the driving gear."

When the vehicle having the power output device 1 installed therein is driven on a flat road, as indicated by an oil surface OL in FIG. 12 and FIG. 13, the presence of sufficient lubricating oil in the space 69, and on the second oblique rib 72b and the oblique rib 92 allows the first idler gear 46, the first output gear 44, and the ring gear 54 to be sufficiently immersed in the lubricating oil. With this configuration, irrespective of the power generation motor driving mode, the discharge motor driving mode, or the charging mode, and also irrespective of forward traveling (FIG. 12) and reverse traveling (FIG. 13), due to the lubricating oil scooped up by these gears (the first idler gear 46, the first output gear 44, and the ring gear 54) immersed in the lubricating oil, sufficient lubricating oil is supplied to each of the parts requiring lubrication on the engine 2 side power transmission path and the motor 4 side power transmission path, which ensures a favorable lubrication state.

Meanwhile, when the vehicle having the power output device 1 installed therein is driven on an uphill road, as illustrated in FIG. 14 and FIG. 15, the power output device 1 is inclined in a state in which the first output shaft 24 side (the left sides of FIG. 14 and FIG. 15) is raised higher than the wheel shaft WS side (the right side of FIG. 14 and FIG. 15). This causes the oil surface OL to be inclined, and generates a state in which, although sufficient lubricating oil is present in the space 69, it cannot be said that sufficient lubricating oil is present on the second oblique rib 72b and the oblique rib 92. In other words, a state may be generated in which, on the second oblique rib 72b and the oblique rib 92, the lubricating oil is stored only to a degree at which the toothed portions of the first idler gear 46 are immersed on the first circular arc portions 73b and 93b.

When the vehicle having the power output device 1 installed therein is driven in the power generation motor driving mode or the discharge motor driving mode in this state, since the ring gear 54 is sufficiently immersed in the lubricating oil, irrespective of the forward traveling (FIG. 14) or the reverse traveling (FIG. 15), due to the lubricating oil scooped up by the ring gear 54, sufficient lubricating oil is supplied to each of the parts requiring lubrication on the engine 2 side power transmission path and the motor 4 side power transmission path, which ensures a favorable lubrication state.

Note that, in the power generation motor driving mode, the lubricating oil scooped up by the first idler gear 46 is also supplied to each of the parts requiring lubrication on the engine 2 side power transmission path. Here, on the first circular arc portions 73b and 93b of the second oblique rib 72b and the oblique rib 92, the lubricating oil scooped up by the ring gear 54 is supplied via the circular arc ribs 74 and 94, and the straight line portions 73a and 93a of the second oblique rib 72b and the oblique rib 92.

Specifically, the lubricating oil that is scooped up by the ring gear 54 and impinges on the circular arc ribs 74 and 94 is guided onto the straight line portions 73a and 93a of the second oblique rib 72b and the oblique rib 92 by the circular arc ribs 74 and 94, and is further guided to the first circular arc portions 73b and 93b by the straight line portions 73a and 93a.

Here, since the second oblique rib 72b and the oblique rib 92 have the straight line portions 73a and 93a, the lubricating oil can be smoothly guided to the first circular arc portions 73b and 93b. Furthermore, the circular arc ribs 74 and 94 are configured such that one ends thereof overlap with the straight line portions 73a and 93a in the extending direction, which allows the lubricating oil to be efficiently transferred from the circular arc ribs 74 and 94 to the straight line portions 73a and 93a.

Note that, since the configuration has the first oblique rib 72a, the lubricating oil scooped up by the ring gear 54 during reverse traveling (FIG. 15) can be favorably guided to the circular arc ribs 74 and 94. At the same time, since the configuration has the covering rib 78, the lubricating oil scooped up by the ring gear 54 during forward traveling (FIG. 14) can be favorably guided as far as the meshing section between the ring gear 54 and the third idler gear 58, and the amount of lubricating oil splashed toward the circular arc ribs 74 and 94 from the meshing section can be increased. With configuration, the lubricating oil scooped up by the ring gear 54 can be even more favorably guided to the first circular arc portions 73b and 93b.

Furthermore, onto the first circular arc portions 73b and 93b, the lubricating oil present in the space TS flows via the notch 95, along with the rotation of the first idler gear 46. Specifically, a space between the outer circumferential surface of the first idler gear 46, and the first circular arc portions 73b and 93b has negative pressure as a result of the rotation of the first idler gear 46, which causes the lubricating oil present in the space TS to flow onto the first circular arc portions 73b and 93b via the notch 95.

With this configuration, the lubrication of each of the parts to be lubricated on the engine 2 side power transmission path can be further improved.

Meanwhile, when the vehicle having the power output device 1 installed therein is driven in the charging mode with the power output device 1 in the inclined state as illustrated in FIG. 14 and FIG. 15, the motor 4 is not driven and thus the lubricating oil is not scooped up by the ring gear 54, which causes the lubrication to be performed only with the lubricating oil scooped up by the first idler gear 46. Note that, in the charging mode, since the motor 4 is not driven, the supply of the lubricating oil to the motor 4 side power transmission path is not necessary.

In the charging mode on the uphill road, the lubricating oil stored on the first circular arc portions 73b and 93b is scooped up by the first idler gear 46, is carried to a meshing section between the first idler gear 46 and the first output gear 44, and, after lubricating that meshing section, is splashed from the meshing section toward the breather forming wall sections 32b and 34b.

The lubricating oil that has been splashed toward the breather forming wall sections 32b and 34b and has impinged on the breather forming wall sections 32b and 34b flows as far as the vertically extending ribs 76 and 96 along the wall surfaces of the breather forming wall sections 32b and 34b and subsequently down onto the first input gear 42 along the vertically extending ribs 76 and 96.

The lubricating oil that has flowed down onto the first input gear 42 is caused to rotate along with the rotation of the first input gear 42, is carried as far as a meshing section between the first input gear 42 and the first idler gear 46, and is splashed downward from that meshing section. Most of the lubricating oil that has been splashed downward from that meshing section impinges on the straight line portions 73a and 93a of the second oblique rib 72b and the oblique rib 92, is guided by the straight line portions 73a and 93a to the first circular arc portions 73b and 93b of the second oblique rib 72b and the oblique rib 92, and is further guided by the first idler gear 46 as far as the second circular arc portions 73c and 93c. With this configuration, depletion of the lubricating oil stored on the first circular arc portions 73b and 93b can be prevented.

Furthermore, of the lubricating oil that has been splashed from the meshing section between the first input gear 42 and the first idler gear 46, the lubricating oil that is caused to rotate along with the rotation of the first input gear 42 and is splashed in the rotational direction of the first input gear 42 impinges on the circular arc ribs 74 and 94, and subsequently flows on the circular arc ribs 74 and 94, flows down onto the straight line portions 73a and 93a, and is guided by the straight line portions 73a and 93a as far as the first circular arc portions 73b and 93b, and the second circular arc portions 73c and 93c.

With this configuration, the lubricating oil that is caused to rotate along with the rotation of the first input gear 42 and is splashed in the rotational direction of the first input gear 42 can also be guided to the first circular arc portions 73b and 93b and to the second circular arc portions 73c and 93c, which can effectively prevent depletion of the lubricating oil stored on the first circular arc portions 73b and 93b and on the second circular arc portions 73c and 93c.

The lubricating oil guided to the first circular arc portions 73b and 93b and the second circular arc portions 73c and 93c in this manner is once more scooped up by the first idler gear 46 and the first output gear 44.

With this configuration, the lubricating oil scooped up by the first idler gear 46 is returned once more to the first circular arc portions 73b and 93b and the second circular arc portions 73c and 93c through the breather forming wall sections 32b and 34b, the vertically extending ribs 76 and 96, the straight line portions 73a and 93a of the second oblique rib 72b and the oblique rib 92, and the circular arc ribs 74 and 94, namely, the lubricating oil is circulated within the region S, which can favorably prevent a deterioration in the lubrication on the engine 2 side power transmission path even in the charging mode on the uphill road.

Note that, in a similar manner to that described above, the lubricating oil present in the space TS flows onto the first circular arc portions 73b and 93b via the notch 95, which can even more effectively prevent depletion of the lubricating oil on the first circular arc portions 73b and 93b.

It is needless to say that even when, in the power generation motor driving mode, the engine 2 side power transmission path is lubricated by the lubricating oil scooped up by the first idler gear 46, the lubricating oil is circulated within the region S as described above.

In the present embodiment, the first gear mechanism TM1 is constituted of the first input gear 42, the first output gear 44, the first idler gear 46 that meshes with both the first input gear 42 and the first output gear 44, and the first idler shaft 47 that supports the first idler gear 46, but the present invention is not limited to this configuration. For example, the first gear mechanism TM1 may be constituted of only the first input gear 42 and the first output gear 44 that meshes directly with the first input gear 42, or may have a configuration in which, as with the second gear mechanism TM2, two idler gears that separately mesh with the first input gear 42 and the first output gear 44 are supported by the first idler shaft 47.

In the configuration in which the first gear mechanism TM1 is constituted of only the first input gear 42 and the first output gear 44 that directly meshes with the first input gear 42, it is sufficient that the second oblique rib 72b and the oblique rib 92 be configured such that the lubricating oil can be scooped up by either of the first input gear 42 and the first output gear 44. Furthermore, in the configuration in which the first gear mechanism TM1 includes the two idler gears, it is sufficient that the second oblique rib 72b and the oblique rib 92 be configured such that the lubricating oil can be scooped up by at least either of the idler gears.

Furthermore, the second gear mechanism TM2 is constituted of the second input gear 52, the second idler gear 56 that meshes with the second input gear 52, the ring gear 54, the third idler gear 58 that meshes with the ring gear 54, and the second idler shaft 59 that supports the idler gears 56 and 58, but the present invention is not limited to this configuration. For example, the second gear mechanism TM2 may be constituted of only the second input gear 52 and the ring gear 54 that meshes directly with the second input gear 52, or may have a configuration in which, as with the first gear mechanism TM1, an idler gear that meshes with both the second input gear 52 and the ring gear 54 is supported by the second idler shaft 59.

In the present embodiment, the configuration is employed in which the arrangement direction of the first input shaft 22, the first idler shaft 47, and the first output shaft 24 that configure the engine 2 side power transmission path, and the arrangement direction of the second input shaft 26, the second idler shaft 59, and the wheel shaft WS that configure the motor 4 side power transmission path are disposed in a substantial inverse V shape when viewed from the axial direction, but the present invention is not limited to this configuration. For example, a configuration may be employed in which the arrangement direction of the first input shaft 22, the first idler shaft 47, and the first output shaft 24, and the arrangement direction of the second input shaft 26, the second idler shaft 59, and the wheel shaft WS that configure the motor 4 side power transmission path are disposed in an inclined L shape that the wheel shaft WS is disposed furthest to the lower side when viewed from the axial direction.

In the present embodiment, the configuration is employed in which the first oblique rib 72a and the second oblique rib 72b are connected, but as long as the lubricating oil scooped up by the ring gear 54 can be guided to the second oblique rib 72b and the oblique rib 92, a configuration may be employed in which the first oblique rib 72a and the second oblique rib 72b are not connected, or the first oblique rib 72a is not provided.

In the present embodiment, the configuration is employed in which the first input shaft 22 is supported via the bearings B1 in the attachment holes 61 and 81 formed substantially in the center portion of the housing 32 and the case body 34, and the first output shaft 24 is supported via the bearings B3 in the attachment holes 63 and 83 formed at the intersection portion of the left side (the left side of FIG. 5) wall portion and the lower wall portion of the housing 32 and the intersection portion of the right side (the right side of FIG. 7) wall portion and the lower wall portion of the case body 34, but in contrast, a configuration may be employed in which the first input shaft 22 is supported via the bearings B1 in the attachment holes 63 and 83, and the first output shaft 24 is supported via the bearings B3 in the attachment holes 61 and 81.

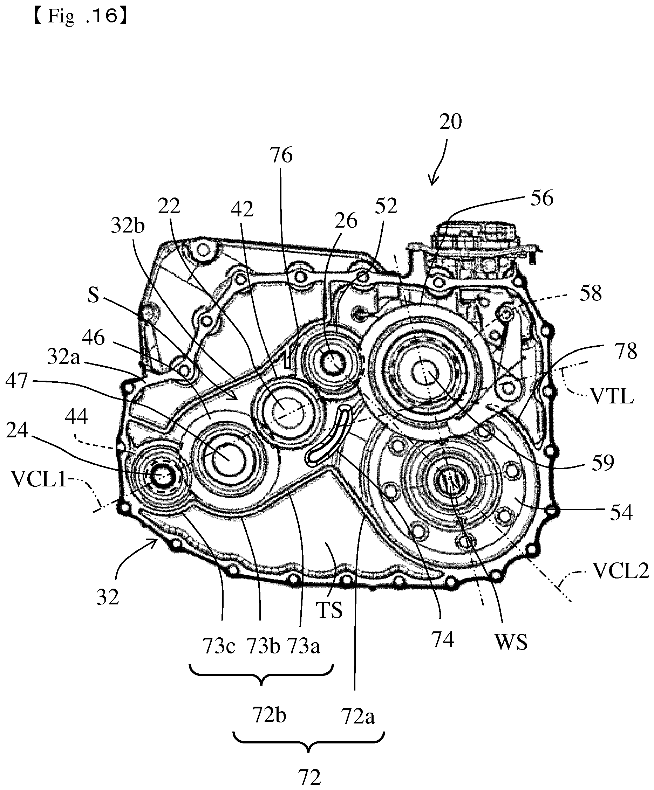

In the present embodiment, the other end in the extending direction of the circular arc rib 74 extends as far as a position where the other end is in contact with the tangential line VTL with respect to the meshing section between the ring gear 54 and the third idler gear 58, but, as illustrated in FIG. 16, the other end in the extending direction of the circular arc rib 74 may extend as far as a position where the other end intersect the tangential line VTL. Note that, in this configuration, the circular arc rib 94 that corresponds to the circular arc rib 74 preferably has the same configuration as the circular arc rib 74.

According to this configuration, when the vehicle having the power output device 1 installed therein travels forward in the power generation motor driving mode or the discharge motor mode, the lubricating oil splashed from the meshing section between the ring gear 54 and the third idler gear 58 impinges easily on the circular arc ribs 74 and 94, which allows the lubricating oil to be more efficiently led to the second oblique rib 72b and the oblique rib 92 via the circular arc ribs 74 and 94.

In the present embodiment, the circular arc ribs 74 and 94 are formed in an arc shape, but the present invention is not limited to this configuration. For example, the circular arc ribs 74 and 94 may be formed in a straight line shape.

In the present embodiment, the configuration is employed in which the notch 95 is formed in the oblique rib 92, but the notch 95 need not necessarily be formed in the oblique rib 92 and the notch 95 may be formed in the second oblique rib 72b, or need not necessarily be formed at all.

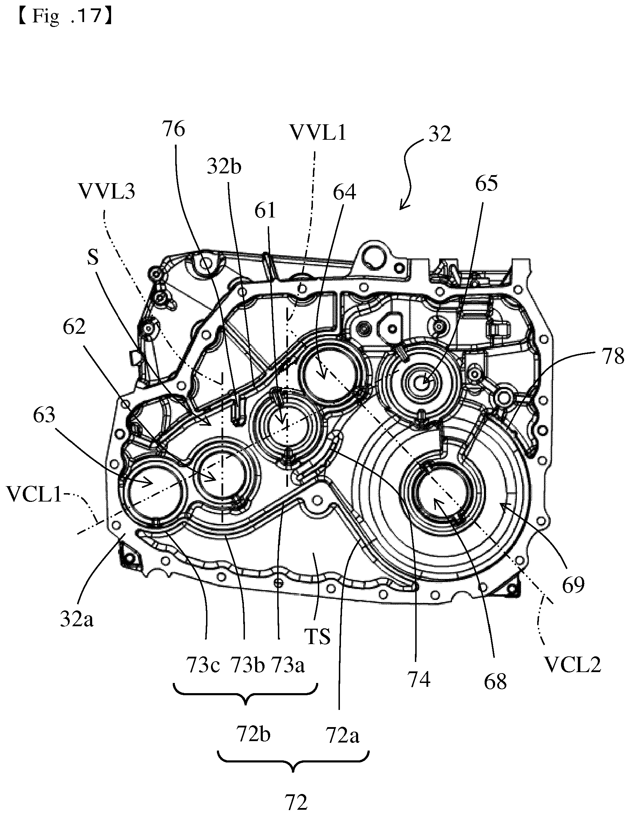

In the present embodiment, the vertically extending rib 76 extends vertically downward from the position directly above the center of the attachment hole 61, but, as illustrated in FIG. 17, it is sufficient that the vertically extending rib 76 be provided extending vertically downward from a position directly above a position between the center of the attachment hole 61 and the center of the attachment hole 62. Note that, in this configuration, it is sufficient that the vertically extending rib 96 also be provided in a position corresponding to the vertically extending rib 76.

In the present embodiment, the configuration is employed in which the breather forming wall sections 32b and 34b are provided extending substantially in parallel to the first virtual connecting line VCL 1 above the first and the second input gears 42 and 52, the first idler gear 46, and the first output gear 44, but the present invention is not limited to this configuration. For example, a configuration may be employed in which the breather forming wall sections 32b or 34b are not provided, and the upper wall portions of the housing 32 and the case body 34 extend substantially in parallel to the first virtual connecting line VCL 1 in the vicinity of the outer circumferential surfaces of the first and the second input gears 42 and 52, the first idler gear 46, and the first output gear 44. In this configuration, it is sufficient that the vertically extending ribs 76 and 96 be directly provided extending down from the upper wall portions of the housing 32 and the case body 34.

The present embodiment is an example of the embodiments of the present invention. Accordingly, the present invention is not limited to the configuration of the present embodiment.

### Reference Signs List

- 1: Power output device (power output device)
- 2: Engine (internal combustion engine)
- 4: Motor (motor)
- 6: Power generator (power generator)
- 14: Motor rotation shaft (rotation shaft of motor)
- 16: Power generator rotation shaft (rotation shaft of power generator)
- 20: Power transmission device (power transmission device)
- 22: First input shaft (first input shaft)
- 24: First output shaft (coupling shaft)
- 26: Second input shaft (second input shaft)
- 28: Differential device
- 30: Gear case (case member)
- 32: Housing
- 32a: Fastening flange portion
- 32b: Breather forming wall section (upper interior wall surface)
- 34: Case body
- 34a: Fastening flange portion
- 34b: Breather forming wall section (upper interior wall surface)
- 42: First input gear (meshing gear)
- 44: First output gear (second meshing gear)
- 46: First idler gear (scooping up gear)
- 47: First idler shaft
- 52: Second input gear (motor gear)
- 54: Ring gear (driving gear)
- 56: Second idler gear (first intermediate gear)
- 58: Third idler gear (second intermediate gear)
- 59: Second idler shaft (rotation shaft of first intermediate gear)
- 61: Attachment hole
- 62: Attachment hole
- 63: Attachment hole
- 64: Attachment hole
- 65: Attachment hole
- 68: Attachment hole
- 69: Space
- 72: Chevron-shaped rib
- 72a: First oblique rib (second guiding wall)
- 72b: Second oblique rib (holding portion, isolating wall)
- 73a: Straight line portion (extending portion)
- 73b: First circular arc portion (circular arc portion)
- 73c: Second circular arc portion (second circular arc portion)
- 74: Circular arc rib (guiding portion, guiding wall)
- 76: Vertically extending rib (protruding wall portion)
- 78: Covering rib (third guiding wall)
- 81: Attachment hole
- 82: Attachment hole
- 83: Attachment hole
- 84: Attachment hole
- 85: Attachment hole
- 88: Attachment hole
- 92: Oblique rib (holding portion, isolating wall)
- 93a: Straight line portion (extending portion)
- 93b: First circular arc portion (circular arc portion)
- 93c: Second circular arc portion (second circular arc portion)
- 94: Circular arc rib (guiding portion, guiding wall)
- 95: Notch (through portion)
- 96: Vertically extending rib (protruding wall portion)
- CS: Crank shaft (output shaft of internal combustion engine)
- FH: Flywheel
- TM1: First gear mechanism (first gear mechanism)
- TM2: Second gear mechanism (second gear mechanism)
- B1: Bearing
- B2: Bearing
- B3: Bearing
- B4: Bearing
- B5: Bearing
- WS: Wheel shaft (drive shaft)
- VCL1: First virtual connecting line (first virtual connecting line)
- VCL2: Second virtual connecting line (second virtual connecting line)
- CA: Concave area
- S: Region
- TS: Space

## Claims

1. A power transmission device (20) configured to transmit, from an internal combustion engine (2) to a rotation shaft (16) of a power generator (6), power input via an output shaft (CS) of the internal combustion engine, and to transmit, from a motor (4) to a drive shaft (WS), power input via a rotation shaft (14) of the motor, the power transmission device comprising:
a first input shaft (22) disposed in parallel to the drive shaft and configured to be connected to the output shaft of the internal combustion engine;
a coupling shaft (24) disposed in parallel to the first input shaft and configured to be connected to the rotation shaft of the power generator;
a second input shaft (26) disposed in parallel to the drive shaft and configured to be connected to the rotation shaft of the motor;
a first gear mechanism (TM1) connecting the first input shaft and the coupling shaft; and
a second gear mechanism (TM2) configured to connect the second input shaft and the drive shaft; and
a case member (30),
**characterized in that**:
the case member is configured to store lubricating oil;
the second gear mechanism includes a driving gear (54) configured to be at least partially kept immersed in the lubricating oil stored in the case member;
the case member includes a holding portion (72b, 92) configured to hold lubricating oil that has been scooped up by the driving gear;
the first gear mechanism includes a scooping up gear (46) configured to scoop up lubricating oil held in the holding portion; and
the case member is configured to guide to the holding portion at least some of the lubricating oil that has been scooped by the scooping up gear.

2. The power transmission device (20) according to claim 1, wherein:
the case member (30) includes a guiding portion (74, 94) configured to guide to the holding portion (72b, 92) at least some of the lubricating oil that has been scooped up by the scooping up gear (46).

3. The power transmission device (20) according to claim 2, wherein:
the guiding portion (74, 94) includes a protruding wall portion (76, 96) protruding toward the holding portion (72b, 92) from an upper interior wall surface (32b, 34b) of the case member (30); and
the guiding portion is configured to guide to the holding portion the lubricating oil that has been scooped up by the scooping up gear (46) and impinged on the upper interior wall surface by causing the lubricating oil to flow from the upper interior wall surface along the protruding wall portion.

4. The power transmission device (20) according to claim 2 or 3, wherein:
when viewed from an axial direction, the first input shaft (22), the coupling shaft (24), the second input shaft (26), and the drive shaft (WS) are disposed such that a first virtual connecting line (VCL1) connecting an axial center of the first input shaft and an axial center of the coupling shaft, and a second virtual connecting line (VCL2) connecting an axial center of the second input shaft and an axial center of the drive shaft (WS) form a substantial inverse V shape, and are configured such that the second input shaft is disposed closer to an apex of the substantial inverse V shape than the drive shaft;
the first gear mechanism (TM1) includes a meshing gear (42) that meshes with the scooping up gear (46);
the meshing gear (42) and the scooping up gear (46) are disposed on the first virtual connecting line and are configured such that the meshing gear is disposed closer to the apex of the substantial inverse V shape than the scooping up gear;
the holding portion (72b, 92) includes a circular arc portion (73b, 93b) disposed below the scooping up gear and has substantially the same curvature as curvature of the scooping up gear, and an extending portion (73a, 93a) extending substantially in parallel to the first virtual connecting line from one end of the circular arc portion to below the meshing gear, and is an isolating wall (72b, 92) separating the scooping up gear and the bottom portion of the case member (30);
the scooping up gear and the meshing gear are configured to cause the lubricating oil splashed from a meshing section between the scooping up gear and the meshing gear to rotate in a direction toward a bottom portion of the case member; and
the guiding portion (74, 94) further includes a guiding wall (74, 94) that is disposed, when viewed from the axial direction, in a position corresponding to a position between the meshing gear and the extending portion, and separates the meshing gear and the driving gear (54), and is configured such that one end thereof overlaps with the extending portion in an extending direction of the extending portion, so that the guiding wall guides to the holding portion, of the lubricating oil splashed from the meshing section, at least some of lubricating oil caused to rotate along with the rotation of the meshing gear, and guides to the holding portion at least some of lubricating oil that has been scooped up by the rotation in a first rotational direction of the driving gear.

5. The power transmission device (20) according to claim 4, wherein:
the guiding wall (74, 94) is in an arc shape along the meshing gear (42).

6. The power transmission device (20) according to claim 4 or 5, further comprising:
a second guiding wall (72a) configured to guide, to the guiding wall (74, 94), the lubricating oil that has been scooped up by the rotation in the first rotational direction of the driving gear (54),
wherein:
the second guiding wall is connected to the extending portion (73a, 93a).

7. The power transmission device (20) according to any one of claims 4 to 6, wherein:
the second gear mechanism (TM2) includes a motor gear (52) fixed to the second input shaft (26), the driving gear (54), a first intermediate gear (56) that meshes with the motor gear, a rotation shaft (59) of the first intermediate gear, and a second intermediate gear (58) fixed to the rotation shaft of the first intermediate gear and that meshes with the driving gear, and is configured to cause lubricating oil that has been scooped up by rotation in a second rotational direction of the driving gear and splashed from a meshing section between the driving gear and the second intermediate gear to move toward the guiding wall (74, 94); and
the guiding wall is configured such that the other end thereof extends to a position intersecting a tangential line (VTL) with respect to the meshing section between the driving gear and the second intermediate gear.

8. The power transmission device (20) according to claim 7, further comprising:
a third guiding wall (78) configured to guide, to the meshing section between the driving gear (54) and the second intermediate gear (58), the lubricating oil that has been scooped up by the rotation in the second rotational direction of the driving gear.

9. The power transmission device (20) according to any one of claims 4 to 8, wherein:
the protruding wall portion (76, 96) is disposed directly above a position between a rotational center of the scooping up gear (46) and a rotational center of the meshing gear (42).

10. The power transmission device (20) according to claim 9, wherein:
the protruding wall portion (76, 96) is disposed directly above the rotational center of the meshing gear (42).

11. The power transmission device (20) according to any one of claims 4 to 10, wherein:
the first gear mechanism (TM1) further includes a second meshing gear (44) that meshes with the scooping up gear (46);
the meshing gear (42) is fixed to one of the first input shaft (22) and the coupling shaft (24);
the second meshing gear is fixed to the other of the first input shaft and the coupling shaft;
the holding portion (72b, 92) includes a second circular arc portion (73c, 93c) disposed below the second meshing gear and extending along the second meshing gear, and separates the second meshing gear and the bottom portion of the case member (30); and
the second circular arc portion is connected to the other end of the circular arc portion (73b, 93b).

12. The power transmission device (20) according to any one of claims 4 to 10, wherein
the circular arc portion (73b, 93b) includes a through portion (95) configured to allow, of an interior space of the case member (30), a space (S) in which the scooping up gear (46) is disposed and a space (TS) in which the bottom portion is disposed to communicate with each other.

13. A power output device (1) comprising:
an internal combustion engine (2);
a power generator (6) that generates power with driving of the internal combustion engine;
a motor (4) driven by the power generated by the power generator;
a drive shaft (WS) through which power from the motor is output; and
the power transmission device (20) according to any one of claims 1 to 12 connecting the internal combustion engine and the power generator, and connecting the motor and the drive shaft.

## Patentansprüche

1. Kraftübertragungsvorrichtung (20), die konfiguriert ist, von einem Verbrennungsmotor (2) auf eine Drehwelle (16) eines Stromgenerators (6) Leistung zu übertragen, die über eine Ausgangswelle (CS) des Verbrennungsmotors zugeführt wird, und von einem Motor (4) auf eine Antriebswelle (WS) Leistung zu übertragen, die über eine Drehwelle (14) des Motors zugeführt wird, wobei die Kraftübertragungsvorrichtung aufweist:
eine erste Eingangswelle (22), die parallel zur Antriebswelle angeordnet und konfiguriert ist, mit der Ausgangswelle des Verbrennungsmotors verbunden zu sein;
eine Kopplungswelle (24), die parallel zur ersten Eingangswelle angeordnet und konfiguriert ist, mit der Drehwelle des Stromgenerators verbunden zu sein;
eine zweite Eingangswelle (26), die parallel zur Antriebswelle angeordnet und konfiguriert ist, mit der Drehwelle des Motors verbunden zu sein;
einen ersten Getriebemechanismus (TM1), der die erste Eingangswelle und die Kopplungswelle verbindet; und
einen zweiten Getriebemechanismus (TM2), der konfiguriert ist, die zweite Eingangswelle und die Antriebswelle zu verbinden; und
ein Gehäuseelement (30),
**dadurch gekennzeichnet, dass**:
das Gehäuseelement konfiguriert ist, Schmieröl zu speichern;
der zweite Getriebemechanismus ein Antriebszahnrad (54) aufweist, das konfiguriert ist, mindestens teilweise in das im Gehäuseelement gespeicherte Schmieröl eingetaucht gehalten zu werden;
das Gehäuseelement einen Halteabschnitt (72b, 92) aufweist, der konfiguriert ist, Schmieröl zu halten, das durch das Antriebszahnrad geschöpft worden ist;
der erste Getriebemechanismus ein Schöpfzahnrad (46) aufweist, das konfiguriert ist, im Halteabschnitt gehaltenes Schmieröl zu schöpfen; und
das Gehäuseelement konfiguriert ist, mindestens einen Teil des Schmieröls zum Halteabschnitt zu führen, das durch das Schöpfzahnrad geschöpft worden ist.

2. Kraftübertragungsvorrichtung (20) nach Anspruch 1, wobei: das Gehäuseelement (30) einen Führungsabschnitt (74, 94) aufweist, der konfiguriert ist, mindestens einen Teil des Schmieröls zum Halteabschnitt (72b, 92) zu führen, das durch das Schöpfzahnrad (46) geschöpft worden ist.

3. Kraftübertragungsvorrichtung (20) nach Anspruch 2, wobei:
der Führungsabschnitt (74, 94) eine vorstehenden Wandabschnitt (76, 96) aufweist, der von einer oberen Innenwandfläche (32b, 34b) des Gehäuseelements (30) zum Halteabschnitt (72b, 92) vorsteht; und
der Führungsabschnitt konfiguriert ist, das Schmieröl, das durch das Schöpfzahnrad (46) geschöpft worden ist und auf die obere Innenwandfläche aufgeprallt ist, zum Halteabschnitt zu führen, indem er das Schmieröl veranlasst, von der oberen Innenwandfläche längs des vorstehenden Wandabschnitts zu fließen.

4. Kraftübertragungsvorrichtung (20) nach Anspruch 2 oder 3, wobei:
aus einer axialen Richtung gesehen die erste Eingangswelle (22), die Kopplungswelle (24), die zweite Eingangswelle (26) und die Antriebswelle (WS) so angeordnet sind, dass eine erste virtuelle Verbindungslinie (VCL1), die eine axiale Mitte der ersten Eingangswelle und eine axiale Mitte der Kopplungswelle verbindet, und eine zweite virtuelle Verbindungslinie (VCL2), die eine axiale Mitte der zweiten Eingangswelle und eine axiale Mitte der Antriebswelle (WS) verbindet, eine im Wesentlichen umgekehrte V-Form bilden und so konfiguriert sind, dass die zweite Eingangswelle näher zu einem Scheitelpunkt der im Wesentlichen umgekehrten V-Form angeordnet ist als die Antriebswelle;
der erste Getriebemechanismus (TM1) ein Eingriffszahnrad (42) aufweist, das mit dem Schöpfzahnrad (46) in Eingriff steht;
das Eingriffszahnrad (42) und das Schöpfzahnrad (46) auf der ersten virtuellen Verbindungslinie angeordnet und so konfiguriert sind, dass das Eingriffszahnrad näher zum Scheitelpunkt der im Wesentlichen umgekehrten V-Form angeordnet ist als das Schöpfzahnrad;
der Halteabschnitt (72b, 92) einen Kreisbogenabschnitt (73b, 93b), der unter dem Schöpfzahnrad angeordnet ist und im Wesentlichen dieselbe Krümmung wie die Krümmung des Schöpfzahnrads aufweist, und einen Verlängerungsabschnitt (73a, 93a) aufweist, der sich im Wesentlichen parallel zur ersten virtuellen Verbindungslinie von einem Ende des Kreisbogenabschnitts unter das Eingriffszahnrad erstreckt, und eine Trennwand (72b, 92) ist, die das Schöpfzahnrad und den unteren Abschnitt des Gehäuseelements (30) trennt;
das Schöpfzahnrad und das Eingriffszahnrad konfiguriert sind, das von einem Eingriffsabschnitt zwischen dem Schöpfzahnrad und dem Eingriffszahnrad gespritzte Schmieröl zu veranlassen, sich in einer Richtung zu einem unteren Abschnitt des Gehäuseelements zu drehen; und
der Führungsabschnitt (74, 94) ferner eine Führungswand (74, 94) aufweist, die aus der axialen Richtung gesehen an einer Position angeordnet ist, die einer Position zwischen dem Eingriffszahnrad und dem Verlängerungsabschnitt entspricht, und das Eingriffszahnrad und das Antriebszahnrad (54) trennt und so konfiguriert ist, dass sich ein Ende in einer Ausdehnungsrichtung des Verlängerungsabschnitts mit dem Verlängerungsabschnitt überlappt, so dass die Führungswand von dem Schmieröl, das vom Eingriffsabschnitt gespritzt wird, mindestens einen Teil des Schmieröls zum Halteabschnitt führt, das veranlasst worden ist, sich zusammen mit der Drehung des Eingriffszahnrads zu drehen, und mindestens einen Teil des Schmieröls, das durch die Drehung in einer ersten Drehrichtung des Antriebszahnrads geschöpft worden ist, zum Halteabschnitt führt.

5. Kraftübertragungsvorrichtung (20) nach Anspruch 4, wobei: die Führungswand (74, 94) längs des Eingriffszahnrads (42) in einer Bogenform ausgebildet ist.

6. Kraftübertragungsvorrichtung (20) nach Anspruch 4 oder 5, die ferner aufweist:
eine zweite Führungswand (72a), die konfiguriert ist, das Schmieröl zur Führungswand (74, 94) zu führen, das durch die Drehung in der ersten Drehrichtung des Antriebszahnrads (54) geschöpft worden ist,
wobei:
die zweite Führungswand mit dem Verlängerungsabschnitt (73a, 93a) verbunden ist.

7. Kraftübertragungsvorrichtung (20) nach einem der Ansprüche 4 bis 6, wobei:
der zweite Getriebemechanismus (TM2) ein Motorzahnrad (52), das an der zweiten Eingangswelle (26) befestigt ist, das Antriebszahnrad (54), ein erstes Zwischenzahnrad (56), das mit dem Motorzahnrad in Eingriff steht, eine Drehwelle (59) des ersten Zwischenzahnrads und ein zweites Zwischenzahnrad (58) aufweist, das an der Drehwelle des ersten Zwischenzahnrads befestigt ist und das mit dem Antriebszahnrad in Eingriff steht, und konfiguriert ist, Schmieröl zu veranlassen, das durch die Drehung in einer zweiten Drehrichtung des Antriebszahnrads geschöpft worden ist und von einem Eingriffsabschnitt zwischen dem Antriebszahnrad und dem zweite Zwischenzahnrad gespritzt wird, sich zur Führungswand (74, 94) zu bewegen; und die Führungswand so konfiguriert ist, dass sich deren anderes Ende zu einer Position erstreckt, die eine Tangente (VTL) bezüglich des Eingriffsabschnitts zwischen dem Antriebszahnrad und dem zweiten Zwischenzahnrad schneidet.

8. Kraftübertragungsvorrichtung (20) nach Anspruch 7, die ferner aufweist:
eine dritte Führungswand (78), die konfiguriert ist, das Schmieröl, das durch die Drehung in der zweiten Drehrichtung des Antriebszahnrads geschöpft worden ist, zum Eingriffsabschnitt zwischen dem Antriebszahnrad (54) und dem zweiten Zwischenzahnrad (58) zu führen.

9. Kraftübertragungsvorrichtung (20) nach einem der Ansprüche 4 bis 8, wobei:
der vorstehende Wandabschnitt (76, 96) direkt über einer Position zwischen dem Drehmittelpunkt des Schöpfzahnrads (46) und dem Drehmittelpunkt des Eingriffszahnrads (42) angeordnet ist.

10. Kraftübertragungsvorrichtung (20) nach Anspruch 9, wobei: der vorstehende Wandabschnitt (76, 96) direkt über dem Drehmittelpunkt des Eingriffszahnrads (42) angeordnet ist.

11. Kraftübertragungsvorrichtung (20) nach einem der Ansprüche 4 bis 10, wobei:
der erste Getriebemechanismus (TM1) ferner ein zweites Eingriffszahnrad (44) aufweist, das mit dem Schöpfzahnrad (46) in Eingriff steht;
das Eingriffszahnrad (42) an einer der ersten Eingangswelle (22) und der Kopplungswelle (24) befestigt ist;
das zweite Eingriffszahnrad an der anderen der ersten Eingangswelle und der Kopplungswelle befestigt ist;
der Halteabschnitt (72b, 92) einen zweiten Kreisbogenabschnitt (73c, 93c) aufweist, der unter dem zweiten Eingriffszahnrad angeordnet ist und sich längs des zweiten Eingriffszahnrads erstreckt, und das zweite Eingriffszahnrad und den unteren Abschnitt des Gehäuseelements (30) trennt; und
der zweite Kreisbogenabschnitt mit dem anderen Ende des Kreisbogenabschnitts (73b, 93b) verbunden ist.

12. Kraftübertragungsvorrichtung (20) nach einem der Ansprüche 4 bis 10, wobei
der Kreisbogenabschnitt (73b, 93b) einen Durchgangsabschnitt (95) aufweist, der konfiguriert ist, es zu ermöglichen, dass von einem Innenraum des Gehäuseelements (30) ein Raum (S), in dem das Schöpfzahnrad (46) angeordnet ist, und ein Raum (TS), in dem der untere Abschnitt angeordnet ist, miteinander in Verbindung stehen.

13. Leistungsabgabevorrichtung (1), die aufweist:
einen Verbrennungsmotor (2);
einen Stromgenerator (6), der mit dem Antrieb des Verbrennungsmotors Strom erzeugt;
einen Motor (4), der durch den Strom angetrieben wird, der durch den Stromgenerator erzeugt wird;
eine Antriebswelle (WS), durch die die Leistung vom Motor abgegeben wird; und
die Kraftübertragungsvorrichtung (20) nach einem der Ansprüche 1 bis 12, die den Verbrennungsmotor und den Stromgenerator verbindet und die den Motor und die Antriebswelle verbindet.

## Revendications

1. Dispositif de transmission de puissance (20) prévu pour transmettre, d'un moteur à combustion interne (2) à un arbre rotatif (16) d'un générateur électrique (6), une puissance d'entrée par l'intermédiaire d'un arbre de sortie (CS) du moteur à combustion interne, et pour transmettre, d'un moteur électrique (4) à un arbre de transmission (WS), une puissance d'entrée par l'intermédiaire d'un arbre rotatif (14) du moteur électrique, ledit dispositif de transmission de puissance comprenant :
un premier arbre d'entrée (22) disposé parallèlement à l'arbre de transmission et prévu pour être relié à l'arbre de sortie du moteur à combustion interne ;
un arbre d'accouplement (24) disposé parallèlement au premier arbre d'entrée et prévu pour être relié à l'arbre rotatif du générateur électrique ;
un deuxième arbre d'entrée (26) disposé parallèlement à l'arbre de transmission et prévu pour être relié à l'arbre rotatif du moteur électrique ;
un premier mécanisme d'engrenage (TM1) reliant le premier arbre d'entrée et l'arbre d'accouplement ; et
un deuxième mécanisme d'engrenage (TM2) prévu pour relier le deuxième arbre d'entrée et l'arbre de transmission ; et
un élément de carter (30),
**caractérisé en ce que** :
l'élément de carter est prévu pour stocker de l'huile lubrifiante ;
le deuxième mécanisme d'engrenage comprend une roue d'entraînement (54) prévue pour être au moins partiellement maintenue immergée dans l'huile lubrifiante stockée dans l'élément de carter ;
l'élément de carter comprend une partie de retenue (72b, 92) prévue pour contenir l'huile lubrifiante récupérée par le roue d'entraînement ;
le premier mécanisme d'engrenage comprend une roue de ramassage (46) prévue pour récupérer l'huile lubrifiante contenue dans la partie de retenue ; et
l'élément de carter est prévu pour guider vers la partie de retenue au moins une fraction de l'huile lubrifiante récupérée par la roue de ramassage.

2. Dispositif de transmission de puissance (20) selon la revendication 1, où :
l'élément de carter (30) présente une partie de guidage (74, 94) prévue pour guider vers la partie de retenue (72b, 92) au moins une fraction de l'huile lubrifiante récupérée par la roue de ramassage (46).

3. Dispositif de transmission de puissance (20) selon la revendication 2, où :
la partie de guidage (74, 94) présente une partie de paroi saillante (76, 96) s'étendant vers la partie de retenue (72b, 92) depuis une surface de paroi intérieure supérieure (32b, 34b) de l'élément de carter (30) ; et
la partie de guidage est prévue pour guider vers la partie de retenue l'huile lubrifiante récupérée par la roue de ramassage (46) et s'étendant sur la surface de paroi intérieure supérieure en entraînant l'écoulement de l'huile lubrifiante depuis la surface de paroi intérieure supérieure le long de la partie de paroi saillante.

4. Dispositif de transmission de puissance (20) selon la revendication 2 ou la revendication 3, où :
en vue dans la direction axiale, le premier arbre d'entrée (22), l'arbre d'accouplement (24), le deuxième arbre d'entrée (26) et l'arbre de transmission (WS) sont disposés de telle manière qu'une première ligne de connexion virtuelle (VCL1) reliant le centre axial du premier arbre d'entrée et le centre axial de l'arbre d'accouplement, et une deuxième ligne de connexion virtuelle (VCL2) reliant le centre axial du deuxième arbre d'entrée et le centre axial de l'arbre de transmission (WS) forment sensiblement un V inversé, et sont prévus de telle manière que le deuxième arbre d'entrée est plus proche du sommet de la forme sensiblement en V inversé que l'arbre de transmission ;
le premier mécanisme d'engrenage (TM1) comprend une roue engrenée (42) avec la roue de ramassage (46) ;
la roue engrenée (42) et la roue de ramassage (46) sont disposées sur la première ligne de connexion virtuelle et sont prévues de telle manière que la roue engrenée est plus proche du sommet de la forme sensiblement en V inversé que la roue de ramassage ;
la partie de retenue (72b, 92) comprend une section d'arc de cercle (73b, 93b) disposée sous la roue de ramassage et présentant une courbure sensiblement identique à celle de la roue de ramassage, et une section d'extension (73a, 93a) s'étendant sensiblement parallèlement à la première ligne de connexion virtuelle depuis une extrémité de la section d'arc de cercle vers en dessous de la roue engrenée, et est une paroi isolante (72b, 92) séparant la roue de ramassage et la partie inférieure de l'élément de carter (30) ;
la roue de ramassage et la roue engrenée sont prévues pour entraîner l'huile lubrifiante projetée depuis une section d'engrènement entre la roue de ramassage et la roue engrenée en rotation dans la direction vers une partie inférieure de l'élément de carter ; et
la partie de guidage (74, 94) comprend en outre une paroi de guidage (74, 94) disposée, en vue dans la direction axiale, à un emplacement correspondant à un emplacement entre la roue engrenée et la section d'extension, et sépare la roue engrenée et la roue d'entraînement (54), et est prévue de telle manière qu'une de ses extrémités chevauche la section d'extension dans une direction d'extension de la section d'extension, de sorte que la paroi de guidage guide vers la partie de retenue, de l'huile lubrifiante projetée depuis la section d'engrènement, au moins une fraction de l'huile lubrifiante entraînée en rotation par rotation de la roue engrenée, et guide vers la partie de retenue au moins une fraction de l'huile lubrifiante récupérée par rotation dans un premier sens de rotation de la roue d'entraînement.

5. Dispositif de transmission de puissance (20) selon la revendication 4, où :
la paroi de guidage (74, 94) est en forme d'arc le long de la roue engrenée (42).

6. Dispositif de transmission de puissance (20) selon la revendication 4 ou la revendication 5, comprenant en outre :
une deuxième paroi de guidage (72a) prévue pour guider vers la paroi de guidage (74, 94) l'huile lubrifiante récupérée par rotation dans le premier sens de rotation de la roue d'entraînement (54),
où :
la deuxième paroi de guidage est raccordée à la section d'extension (73a, 93a).

7. Dispositif de transmission de puissance (20) selon l'une des revendications 4 à 6, où :
le deuxième mécanisme d'engrenage (TM2) comprend une roue motrice (52) fixée au deuxième arbre d'entrée (26), la roue d'entraînement (54), une première roue intercalaire (56) engrenée avec la roue motrice, un arbre rotatif (59) de la première roue intercalaire, et une deuxième roue intercalaire (58) fixée à l'arbre rotatif de la première roue intercalaire et engrenée avec la roue d'entraînement, et est prévu pour entraîner l'huile lubrifiante récupérée par rotation dans un deuxième sens de rotation de la roue d'entraînement et projetée depuis une section d'engrènement entre la roue d'entraînement et la deuxième roue intercalaire à s'écouler vers la paroi de guidage (74, 94) ; et
la paroi de guidage est prévue de telle manière que son autre extrémité s'étend vers un emplacement croisant une ligne tangentielle (VTL) par rapport à la section d'engrènement entre la roue d'entraînement et la deuxième roue intercalaire.

8. Dispositif de transmission de puissance (20) selon la revendication 7, comprenant en outre :
une troisième paroi de guidage (78) prévue pour guider vers la section d'engrènement entre la roue d'entraînement (54) et la deuxième roue intercalaire (58), l'huile lubrifiante récupérée par rotation de la roue d'entraînement dans le deuxième sens de rotation.

9. Dispositif de transmission de puissance (20) selon l'une des revendications 4 à 8, où :
la partie de paroi saillante (76, 96) est disposée directement au-dessus d'un emplacement entre le centre de rotation de la roue de ramassage (46) et le centre de rotation de la roue engrenée (42).

10. Dispositif de transmission de puissance (20) selon la revendication 9, où :
la partie de paroi saillante (76, 96) est disposée directement au-dessus du centre de rotation de la roue engrenée (42).

11. Dispositif de transmission de puissance (20) selon l'une des revendications 4 à 10, où :
le premier mécanisme d'engrenage (TM1) comprend en outre une deuxième roue engrenée (44) avec la roue de ramassage (46) ;
la roue engrenée (42) est fixée au premier arbre d'entrée (22) ou à l'arbre d'accouplement (24) ;
la deuxième roue engrenée est fixée à l'autre arbre, entre le premier arbre d'entrée et l'arbre d'accouplement ;
la partie de retenue (72b, 92) présente une deuxième section d'arc de cercle (73c, 93c) disposée sous la deuxième roue engrenée et s'étendant le long de la deuxième roue engrenée, et sépare la deuxième roue engrenée et la partie inférieure de l'élément de carter (30) ; et
la deuxième section d'arc de cercle est reliée à l'autre extrémité de la section d'arc de cercle (73b, 93b).

12. Dispositif de transmission de puissance (20) selon l'une des revendications 4 à 10, où
la section d'arc de cercle (73b, 93b) comprend une partie de traversée (95) prévue pour permettre la communication entre eux d'un espace intérieur de l'élément de carter (30), d'un espace (S) où est disposée la roue de ramassage (46) et d'un espace (TS) où est disposée la partie inférieure.

13. Dispositif de sortie de puissance (1), comprenant :
un moteur à combustion interne (2) ;
un générateur électrique (6) générant un courant par entraînement du moteur à combustion interne ;
un moteur électrique (4) entraîné par le courant généré par le générateur électrique ;
un arbre de transmission (WS) par lequel le courant du moteur électrique est sorti ; et
le dispositif de transmission de puissance (20) selon l'une des revendications 1 à 12 reliant le moteur à combustion interne et le générateur électrique, et reliant le moteur électrique et l'arbre de transmission.
